# EUROPEAN PATENT SPECIFICATION

(11) **EP 3 637 685 B1**
(45) Date of publication and mention of the grant of the patent: **25.10.2023**
(21) Application number: 18200245.1
(22) Date of filing: 12.10.2018
(51) Int. Cl.: H04L 41/0893, H04L 41/0895, H04L 41/0897, H04L 43/0852, H04L 43/0876

(54) **ORCHESTRATION MULTI SCHEDULER FOR MULTI SLICE NETWORK**
ORCHESTRIERUNG EINES MULTI-SCHEDULER FÜR MULTI-SLICE-NETZWERK
PROGRAMMATEUR MULTIPLE D'ORCHESTRATION POUR RÉSEAU DE TRONÇONS MULTIPLES

(43) Date of publication of application: 15.04.2020
(73) Proprietor: Nokia Solutions and Networks Oy, 02610 Espoo (FI)
(72) Inventor: LUONG, Duc-Hung, Nozay 91620 (FR); OUTTAGARTS, Abdelkader, Nozay 91620 (FR)
(74) Representative: Novagraaf Technologies

(56) References cited:
- EP-A1- 3 163 843
- WO-A1-2018/114009

## Description

The present invention relates to a system and a method for managing network resources in a communication network. Particular embodiments relate to a system and a method for managing network resources in a communication network comprising a plurality of network slices.

Networking architectures have grown increasingly complex in communication environments. Communication networks have grown substantially in subscriber base as end users become increasingly connected to mobile wireless environments. As the number of mobile subscribers increases, efficient management of communication resources becomes more critical. Advanced communication networks can be flexibly organized so as to serve various customer demands. Network slicing has been proposed as a means to offer network services in wireless networks. Network slicing provides the ability to create isolated virtual networks over which different traffic flows can travel. Through the use of such communication networks, and network slicing, a dynamic communication network responsive to the immediate needs of the users can be provided.

WO2018/114009A1 relates to systems and methods for programming and/or management of mobile wireless networks that allow an efficient scalability and configuration of the network when additional devices and/or applications are deployed.

The invention is defined by the appended claims.

Embodiments of the invention provide a system and a method for managing network resources in a communication network. More in particular, embodiments of the invention aim to provide a system and a method for managing network resources in a communication network comprising a plurality of network slices, capable of using network resources efficiently, working with user-supplied placement constraints, scheduling applications rapidly to not let them in a pending state, and being robust to network errors.

Within advanced networks, such as those to support future developments in wireless networks (including the fifth generation of mobile technology, or 5G), the network performance should provide, where needed, much greater throughput, much lower latency, ultra-high reliability, much higher connectivity density, higher mobility range, etc. This enhanced performance will provide along with the capability to control a highly heterogeneous environment, and, among others, to ensure security and trust, identity, and privacy. The network slicing towards advanced networks, such as the 5G network, is intended to dynamically create/delete end-to-end slices corresponding to the service demand and traffic changing.

The roles of an orchestrator is to manage clusters of resources, both hardware and software, and to instantiate/un-instantiate a large amount of containers or virtual machines (VMs) in the clusters. The orchestrator typically uses a scheduler which collects data (CPU, memory, etc.) from the cluster and applies algorithms to rank the cluster nodes, the nodes which have more not used resource being at the top of the list. A scheduler may be a pluggable component that selects which node an unscheduled set of containers on the same node should run on based on resource availability. The scheduler tracks resource utilization on each node to ensure that workload is not scheduled more than the available resources. Hence, the scheduler must know the resource availability and their existing workloads assigned across servers. The conventional scheduler manages virtualized instances and infrastructure, then optimizes placement for instantiating service resources.

A single scheduler for numerous slice deployments may create the bottle neck in terms of network scheduling that addresses very intense real-time requirements. This single scheduler is adapted to IT context as it focuses on computing resource, but it is not adapted to telecommunication network slicing architecture with different requirements from one slice to another. This problem is overcome by a system as defined above. By providing a first slice scheduler operatively connected to a first network slice, a second slice scheduler operatively connected to a second network slice, and an orchestrator comprising a master scheduler, different network requirements arising from different network slices are accounted for in the present system, thereby avoiding the creation of the above-mentioned bottle neck in terms of network scheduling. Hence, the system as defined above enables improvements in the field of telecommunications, in order to optimize the scheduling task of an orchestrator to meet the requirements of different slices in a telecommunication network.

According to a preferred embodiment, the orchestrator is configured to create and delete said first network slice and said second network slice. The master scheduler is configured to create or delete said first slice scheduler according to the creation or deletion of the first network slice, and to create or delete and said second slice scheduler according to the creation or deletion of the second network slice. Preferably, the orchestrator is configured to perform said deployment of instances of the first network slice and of the second network slice independently from each other.

According to a preferred embodiment, the orchestrator further comprises a database configured to store data. The master scheduler is configured to collect resource metrics stored in said database from a plurality of first nodes and a plurality of second nodes in the communication network, and to collect a set of requirements stored in said database to be satisfied by the communication network with respect to the first network slice and the second network slice. The master scheduler is further configured to configure scheduling instructions based on said resource metrics and said set of requirements, and to transmit said scheduling instructions to the first slice scheduler and the second slice scheduler. Said set of requirements may comprise any one or more than the following: data rates, download (DL) and upload (UL) speed, reliability, latency, bandwidth data transmission, Graphics Processing Unit (GPU) performance, or a combination thereof. Preferably, one of said data rates corresponds to a DL speed of 1 Gbps or an UL speed of 500 Mbps, and/or said latency is less than 1 ms, and/or said bandwidth data transmission is a broadband data transmission, and/or said GPU performance corresponds to a GPU acceleration.

In this way, for each network slice the master scheduler may use different scheduling algorithms and scheduling metrics, thereby providing adaptability to the system. The scheduling instructions may comprise scheduling metrics like CPU, GPU, memory, and latency scheduling metrics, and may comprise scheduling algorithms like the Best Fit algorithm.

According to a preferred embodiment, the master scheduler is configured to filter said plurality of first nodes and said plurality of second nodes based on said resource metrics and said set of requirements, and to allocate resources to at least one node in the first network slice of said filtered plurality of first nodes and to at least one node in the second network slice of said filtered plurality of second nodes.

In this way, for each network slice the master scheduler may allocate different resources to the filtered nodes, thereby providing capability of using network resources efficiently to the system.

Alternatively or additionally, the first slice scheduler and the second slice scheduler are respectively configured to receive from the database the resource metrics with respect to a plurality of first nodes and a plurality of second nodes in the communication network, to receive from the master scheduler the corresponding scheduling instructions, to filter said plurality of first nodes and said plurality of second nodes based on said resource metrics and said set of requirements, and to allocate resources to at least one node in the first network slice of said filtered plurality of first nodes and to at least one node in the second network slice of said filtered plurality of second nodes.

According to an exemplary embodiment, the master scheduler is configured to reject nodes from said plurality of first nodes and said plurality of second nodes if the resource metrics of said nodes do not fulfill said set of requirements, and to rank said at least one node of the filtered plurality of first nodes and said at least one node of the filtered plurality of second nodes based on said resource metrics and said set of requirements.

In this manner, for each network slice the master scheduler may rank the filtered nodes differently based on the resource metrics of each node and on the set of requirements of each network slice. According to the ranking of said nodes, the master scheduler may perform optimization placements of the corresponding slice scheduler on the most appropriate node, thereby reinforcing the capability of the system of using network resources efficiently.

Alternatively or additionally, the first slice scheduler and the second slice scheduler are respectively configured to reject nodes from said plurality of first nodes and said plurality of second nodes if the resource metrics of said nodes do not fulfill said set of requirements, and to rank said at least one node of the filtered plurality of first nodes and said at least one node of the filtered plurality of second nodes based on said resource metrics and said set of requirements.

According to a preferred embodiment, the first slice scheduler and the second slice scheduler are respectively configured to receive a deployment request of instances of the first network slice and the second network slice, and to perform optimization placements for said instances of the first network slice and the second network slice based on said transmitted scheduling instructions.

In this manner, said optimization placements may lead to a non-uniform repartition of the instances on the filtered nodes following the resources available on said filtered nodes, thereby reinforcing the flexibility of the system.

According to an exemplary embodiment, the master scheduler is configured to evaluate resource demands of the first network slice and the second network slice, and to add or release resource to the first network slice and the second network slice based on said evaluated resource demands.

This provides a dynamic architecture to the system, suitable for the broadband, or wide-bandwidth, dynamic nature of today's applications. Preferably, said evaluations are performed in real time. Preferably, said additions or releases are also performed in real time.

Alternatively or additionally, the first slice scheduler and the second slice scheduler are respectively configured to evaluate resource demands of the first network slice and the second network slice, and to request the master scheduler to add or release resource to the first network slice and the second network slice based on said evaluated resource demands.

According to a preferred embodiment, the orchestrator further comprises a controller configured to employ, based on a request received from said master scheduler, routing between at least two nodes of said filtered plurality of first nodes and between at least two nodes of said filtered plurality of second nodes according to the creation of said first network slice and said second network slice, and to reset, based on a request received from said master scheduler, routing between at least two nodes of said filtered plurality of first nodes and between at least two nodes of said filtered plurality of second nodes according to the deletion of said first network slice and said second network slice. Preferably, the first slice scheduler and the second slice scheduler are respectively configured to delete instances in said at least one node of said filtered plurality of first nodes and said at least one node of said filtered plurality of second nodes according to the deletion of said first network slice and said second network slice. Preferably, said controller is configured to employ and reset routing between said at least two nodes dynamically.

According to a preferred embodiment, the system further comprises a plurality of first agents operatively connected to the communication network and to the first slice scheduler, and a plurality of second agents operatively connected to the communication network and to the second slice scheduler. Said plurality of first agents and said plurality of second agents are respectively configured to receive a request from said first slice scheduler and said second slice scheduler to create and delete instances of the first network slice and the second network slice, to restart an instance of the first network slice and the second network slice that has been shut down, and notify the first slice scheduler and the second slice scheduler, and to collect resource metrics from a plurality of first nodes and a plurality of second nodes in the communication network, and send said resource metrics to the orchestrator.

According to a second aspect of the invention, there is provided a method for managing network resources in a communication network comprising a first network slice and a second network slice. The method comprises collecting, at a master scheduler, and storing, at a database, resource metrics from a plurality of first nodes and a plurality of second nodes in the communication network, and collecting, at said master scheduler, and storing, at said database, a set of requirements to be satisfied by the communication network with respect to the first network slice and the second network slice. The method further comprises configuring, at said master scheduler, scheduling instructions based on said resource metrics and said set of requirements, and transmitting said scheduling instructions from said master scheduler to a first slice scheduler and a second slice scheduler operatively connected to said master scheduler, said first slice scheduler being operatively connected to said first network slice, and said second slice scheduler being operatively connected to said second network slice. Said set of requirements may comprise any one or more than the following: data rates, download (DL) and upload (UL) speed, reliability, latency, bandwidth data transmission, Graphics Processing Unit (GPU) performance, or a combination thereof. Preferably, one of said data rates corresponds to a DL speed of 1 Gbps or an UL speed of 500 Mbps, and/or said latency is less than 1 ms, and/or said bandwidth data transmission is a broadband data transmission, and/or said GPU performance corresponds to a GPU acceleration.

The skilled person will understand that the hereinabove described technical considerations and advantages for system embodiments also apply to the below described corresponding method embodiments, mutatis mutandis.

According to a preferred embodiment, the method further comprises filtering, at said master scheduler, said plurality of first nodes and said plurality of second nodes based on said resource metrics and said set of requirements, and allocating, at said master scheduler, resources to at least one node in the first network slice of said filtered plurality of first nodes and to at least one node in the second network slice of said filtered plurality of second nodes.

Alternatively or additionally, the method further comprises receiving, respectively at said first slice scheduler and said second slice scheduler, from the database resource metrics with respect to a plurality of first nodes and a plurality of second nodes in the communication network, receiving, respectively at said first slice scheduler and said second slice scheduler, from the master scheduler the corresponding scheduling instructions, filtering, respectively at said first slice scheduler and said second slice scheduler, said plurality of first nodes and said plurality of second nodes based on said resource metrics and said set of requirements, and allocating, respectively at said first slice scheduler and said second slice scheduler, resources to at least one node in the first network slice of said filtered plurality of first nodes and to at least one node in the second network slice of said filtered plurality of second nodes.

According to an exemplary embodiment, the method further comprises rejecting, at said master scheduler, nodes from said plurality of first nodes and said plurality of second nodes if the resource metrics of said nodes do not fulfill said set of requirements, and ranking, at said master scheduler, said at least one node of the filtered plurality of first nodes and said at least one node of the filtered plurality of second nodes based on said resource metrics and said set of requirements.

Alternatively or additionally, the method further comprises rejecting, respectively at said first slice scheduler and said second slice scheduler, nodes from said plurality of first nodes and said plurality of second nodes if the resource metrics of said nodes do not fulfill said set of requirements, and ranking, respectively at said first slice scheduler and said second slice scheduler, said at least one node of the filtered plurality of first nodes and said at least one node of the filtered plurality of second nodes based on said resource metrics and said set of requirements.

According to a preferred embodiment, the method further comprises receiving, respectively at said first slice scheduler and said second slice scheduler, a deployment request of instances of the first network slice and the second network slice, and performing, respectively at said first slice scheduler and said second slice scheduler, optimization placements for said instances of the first network slice and the second network slice based on said transmitted scheduling instructions.

According to an exemplary embodiment, the method further comprises evaluating, at said master schedule, resource demands of the first network slice and the second network slice, and adding or releasing, at said master schedule, resource to the first network slice and the second network slice based on said evaluated resource demands.

Alternatively or additionally, the method further comprises evaluating, respectively at said first slice scheduler and said second slice scheduler, resource demands of the first network slice and the second network slice, and requesting, respectively at said first slice scheduler and said second slice scheduler, the master scheduler to add or release resource to the first network slice and the second network slice based on said evaluated resource demands.

According to a preferred embodiment, the method further comprises employing, at a controller, based on a request received from said master scheduler, routing between at least two nodes of said filtered plurality of first nodes and between at least two nodes of said filtered plurality of second nodes according to the creation of said first network slice and said second network slice, and resetting, at said controller, based on a request received from said master scheduler, routing between at least two nodes of said filtered plurality of first nodes and between at least two nodes of said filtered plurality of second nodes according to the deletion of said first network slice and said second network slice. Preferably, the method further comprises deleting, respectively at said first slice scheduler and said second slice scheduler, instances in said at least one node of said filtered plurality of first nodes and said at least one node of said filtered plurality of second nodes according to the deletion of said first network slice and said second network slice.

### BRIEF DESCRIPTION OF THE FIGURES

This and other aspects of the present invention will now be described in more detail, with reference to the appended drawings showing a currently preferred embodiment of the invention. Like numbers refer to like features throughout the drawings.
Figure 1 schematically illustrates an exemplary embodiment of a system for managing network resources in a communication network;
Figures 2A-2F schematically illustrate an exemplary embodiment of a system and a method for managing network resources in a communication network; and
Figures 3A-3E respectively illustrate schematically two exemplary embodiments of a system and a method for managing network resources in a communication network.

### DESCRIPTION OF THE FIGURES

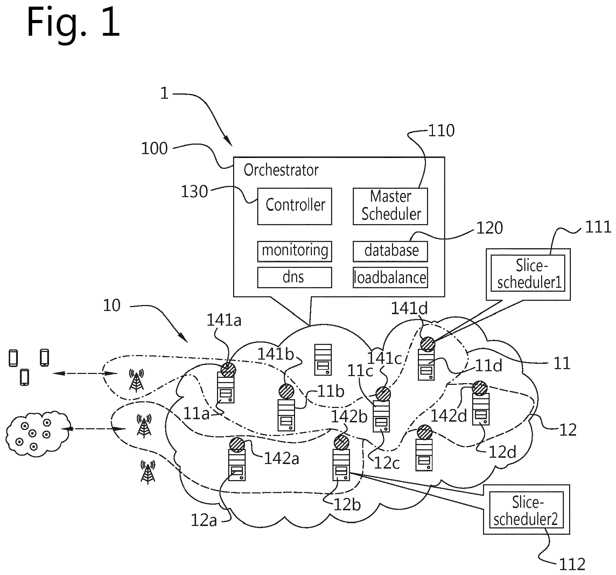

Figure 1 schematically illustrates an exemplary embodiment of a system for managing network resources in a communication network.

As illustrated in Figure 1, the communication network 10 comprises a first network slice 11 and a second network slice 12. The communication network 10 may correspond to a 5G network. The communication network 10 may deal with the so called Software-defined networking (SDN) technology, which provides a dynamic architecture suitable for the broadband, or wide-bandwidth, dynamic nature of applications. The first network slice 11 corresponds to a mobile broadband slice. The second network slice 12 corresponds to a massive Internet-of-Things (IoT) slice. It should be clear for the skilled person that in other embodiments the communication network 10 may comprise more than two network slices, and that said first network slice 11 and/or said second network slice 12 may correspond to other types of network slices than the two above-mentioned examples.

The system 1 comprises a first slice scheduler 111 operatively connected to the first network slice 11, and configured to monitor network resources associated with the first network slice 11, a second slice scheduler 112 operatively connected to said second network slice 12, and configured to monitor network resources associated with the second network slice 12, and an orchestrator 100 configured to create the first network slice 11 and the second network slice 12, and to perform a deployment of instances of the first network slice 11 and of the second network slice 12. The orchestrator 100 comprises a master scheduler 110 operatively connected to the first slice scheduler 111 and to the second slice scheduler 112, and configured to instantiate the first slice scheduler 111 and the second slice scheduler 112. The orchestrator 100 may be configured to create and delete the first network slice 11 and the second network slice 12. The master scheduler 110 may be configured to create or delete the first slice scheduler 111 according to the creation or deletion of the first network slice 11, and to create or delete the second slice scheduler 112 according to the creation or deletion of the second network slice 12. Preferably, the master scheduler 110 is configured to create or delete the first slice scheduler 111 and the second slice scheduler 112 dynamically. Preferably, the orchestrator 100 is configured to perform the deployments of instances of the first network slice 11 and of the second network slice 12 independently from each other.

As illustrated in Figure 1, the orchestrator 100 may further comprise a database 120 configured to store data. The master scheduler 110 may be configured to collect resource metrics stored in said database 120 from a plurality of first nodes and a plurality of second nodes in the communication network 10. In the embodiment of Figure 1, four first nodes 11a, 11b, 11c, 11d are comprised in the first network slice 11, and four second nodes 12a, 12b, 12c, 12d are comprised in the first network slice 12. It should be clear for the skilled person that in other embodiments the number of first and/or second nodes may vary in the first network slice 11 and/or in the second network slice 12. Moreover, one or more nodes may simultaneously belong to different slices. As illustrated in Figure 1, the node 11c of the first network slice 11, which corresponds to the node 12c of the second network slice 12, is shared between both network slices 11 and 12. Such node 11c, 12c may be subject to specific security measures, i.e. in the case where the first network slice 11 belongs to a first telecommunication operator, and the second network slice 12 belongs to a second telecommunication operator. In this case, the second telecommunication operator may request the first telecommunication operator to use said node 11c, 12c. The sharing of such node between different network slices enables the optimization of the deployed resources, a node requiring operating at a certain minimum of its capacity, e.g. minimum 80%, in order to be efficiently used. The collected resource metrics may comprise e.g. the current memory usage and the current available memory, the current Central Processing Unit (CPU) usage and the current available CPU, of said first and second nodes 11a-11d and 12a-12d, and the like. Preferably, the resource metrics are collected in real time for more efficiency of the master scheduler 110.

The master scheduler 110 may collect a set of requirements stored in said database 120 to be satisfied by the communication network 10 with respect to the first network slice 11 and the second network slice 12. Said set of requirements may comprise e.g. high data rate, download (DL) speed and upload (UL) speed, (ultra-)high reliability and (ultra-)low latency for connected cars slices, indoor (ultra-)high broadband access for augmented reality/virtual reality (AR/VR) live broadcasting slices, Graphics Processing Unit (GPU) acceleration for massive IoT slices, and the like. Each network slice may have its specific requirements in terms of the above-mentioned examples. The master scheduler 110 may configure scheduling instructions based on said resource metrics and said set of requirements, and may transmit said scheduling instructions to the first slice scheduler 111 and the second slice scheduler 112. The scheduling instructions may comprise scheduling metrics like CPU, GPU, memory, and latency scheduling metrics, and may comprise scheduling algorithms like the Best Fit algorithm.

In other words, the master scheduler 110 may separate infrastructure for slicing, and may indicate the infrastructure quota (virtual machine, physical machine) that is respectively assigned to the first slice scheduler 111 and to the second slice scheduler 112, based on said resource metrics and said set of requirements with respect to the first network slice 11 and to the second network slice 12. Hence, the master scheduler 110 has a global view and management over the first slice scheduler 111 and the second slice scheduler 112. The master scheduler 110 may also manage service instances that are not related to any of the two slice schedulers 111 and 112. By contrast, each of the two slice schedulers 111 and 112 has a local view and management, as it can only manage the nodes or infrastructures that are related to its corresponding network slice. The first slice scheduler 111 and/or the second slice scheduler 112 may be instantiated separately by the master scheduler 110. Moreover, each of the two slice schedulers 111 and 112 may also run independently from the other slice scheduler, thereby enabling a parallel-scheduling. Each of the two slice schedulers 111 and 112 collects customized scheduling instructions corresponding to the set of requirements of its corresponding network slice. For each network slice, the corresponding slice scheduler may use different scheduling algorithms and scheduling metrics (CPU, GPU, memory, latency, etc.).

As illustrated in Figure 1, the orchestrator 100 may further comprise a controller 130. The controller 130 may be configured to employ, based on a request received from the master scheduler 110, routing between at least two nodes of the four first nodes 11a-11d and between at least two nodes of the four second nodes 12a-12d, according to the creation of the first network slice 11 and the second network slice 12. Similarly, the controller 130 may be configured to reset, based on a request received from the master scheduler 110, routing between at least two nodes of the four first nodes 11a-11d and between at least two nodes of the four second nodes 12a-12d, according to the deletion of the first network slice 11 and the second network slice 12. Preferably, the controller 130 is configured to employ and reset routing between said at least two nodes dynamically.

As illustrated in Figure 1, the system 1 may further comprise a plurality of first agents operatively connected to the communication network 10 and to the first slice scheduler 111, and a plurality of second agents operatively connected to the communication network 10 and to the second slice scheduler 112. In the embodiment of Figure 1, the system 1 comprises four first agents 141a-141d, each being operatively connected to each of the four first nodes 11a-11d of the first network slice 11, and four second agents 142a-142d, each being operatively connected to each of the four second nodes 12a-12d of the second network slice 12. The agent 111c, which corresponds to the agent 112c, is shared between both network slices 11 and 12. As for the node 11c, 12c, such agent 141c, 142c may be subject to specific security measures. The first agents 141a-141d and the second agents 142a-142d may be respectively configured to receive a request from the first slice scheduler 111 and from the second slice scheduler 112 to create and delete instances of the first network slice 11 and the second network slice 12, to restart an instance of the first network slice 11 and the second network slice 12 that has been shut down, and notify the first slice scheduler 111 and the second slice scheduler 112, and to collect resource metrics from the plurality of first nodes and the plurality of second nodes in the communication network 10, and send said resource metrics to the orchestrator 100.

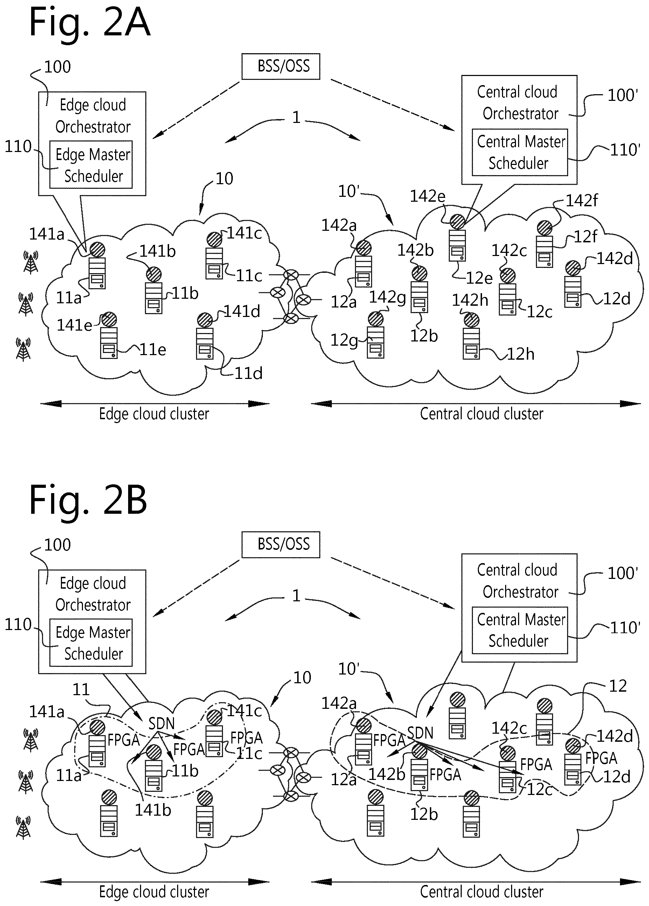

Figures 2A-2F schematically illustrate an exemplary embodiment of a system and a method for managing network resources in a communication network.

As illustrated in Figures 2A-2F, the communication network of Figure 1 is split into a first communication network 10 and a second communication network 10'. The first and second communication networks 10, 10' may correspond to a 5G network. The first and second communication networks 10, 10' may deal with the SDN technology. The first communication network 10 corresponds to an edge communication network, i.e., a communication network near base stations (illustrated by antennas in Figures 2A-2F), and is associated with an edge cloud cluster. The second communication network 10' corresponds to a central communication network, and is associated with a central cloud cluster. The first communication network 10 and the second communication network 10' communicate by preforming end-to-end communications via a backhaul link, e.g. via an intermediary optical fiber network or via an intermediary Ethernet network.

As illustrated in Figure 2A, no network slice creation has yet been requested. At this stage, the system 1 only comprises a first orchestrator 100 comprising a first master scheduler 110 associated with the edge cloud cluster, and a second orchestrator 100' comprising a second master scheduler 110' associated with the central cloud cluster.

As illustrated in Figures 2B-2F, and in accordance with Steps 1-5 of the associated method, the first communication network 10 comprises a first network slice 11, and the second communication network 10' comprises a second network slice 12. Indeed, end-to-end communications imply the use of an equal amount of network slices in the first communication network 10 and in the second communication network 10'. The first network slice 11 and the second network slice 12 correspond to a massive IoT slice. It should be clear for the skilled person that in other embodiments each of the communication networks 10 and 10' may comprise more than two network slices, for example each network may comprise eight network slices, and that said first network slice 11 and said second network slice 12 may correspond to other types of network slices than the above-mentioned example.

As illustrated in Figure 2B, and in accordance with Step 1 of the associated method, an Operational Support System/Business Support System (OSS/BSS) request is sent to the first orchestrator 100 and to the second orchestrator 100' to create a massive IoT slice 11, 12 with GPU acceleration function in each of the first communication network 10 and the second communication network 10'. The first orchestrator 100 creates the first network slice 11, and is configured to perform a deployment of instances of the first network slice 11. The second orchestrator 100' creates the second network slice 12, and is configured to perform a deployment of instances of the second network slice 12. Preferably, the first and second orchestrators 100, 100' are respectively configured to perform the deployments of instances of the first network slice 11 and of the second network slice 12 independently from each other.

The first and second orchestrators 100, 100' further comprise a database (not shown) configured to store data. Each orchestrator may comprise its own database, or may share a common database. The first and second master schedulers 110, 110' may respectively collect resource metrics stored in said database(s) from a plurality of first nodes in the first communication network 10 and a plurality of second nodes in the second communication network 10'. In the embodiments of Figures 2A-2F, five first nodes 11a-11e are comprised in the first communication network 10, and eight second nodes 12a-12h are comprised in the second communication network 10'.

The first and second master schedulers 110, 110' respectively collect a set of requirements stored in said database(s) to be satisfied by the first and second communication networks 10, 10' with respect to the first network slice 11 and the second network slice 12. In the embodiments of Figures 2B-2F, said set of requirements comprise GPU acceleration for massive IoT slices.

The first and second master schedulers 110, 110' respectively configure scheduling instructions based on said resource metrics and said set of GPU acceleration requirements. As for the embodiment of Figure 1, the scheduling instructions may comprise scheduling metrics like CPU, GPU, memory, latency, etc., and may comprise scheduling algorithms like the Best Fit algorithm.

The first and second master schedulers 110, 110' respectively filter the five first nodes 11a-11e and the eight second nodes 12a-12h based on said resource metrics and said set of GPU acceleration requirements. After filtering, three filtered first nodes 11a-11c are comprised in the first network slice 11, and four filtered second nodes 12a-12d are comprised in the second network slice 12. For example, in the embodiment of Figure 2B the three filtered first nodes 11a-11c and the four filtered second nodes 12a-12d may all comprise a Field-Programmable Gate Array (FPGA) functionality meeting the GPU acceleration requirement with respect to the first network slice 11 and the second network slice 12. The first and second master schedulers 110, 110' respectively allocate resources to the three filtered first nodes 11a-11c and to the four filtered second nodes 12a-12d.

The first and second master schedulers 110, 110' may respectively reject nodes from the five first nodes 11a-11e and the eight second nodes 12a-12h if the resource metrics of said nodes do not fulfill said set of requirements. For example, the memory resource and/or the CPU and/or the GPU resource of said rejected nodes may be fully used, or said rejected nodes may be damaged. In another example, said nodes may be reserved by a security slice, and hence unavailable. The first and second master schedulers 110, 110' may also respectively rank the three filtered first nodes 11a-11c and the four filtered second nodes 12a-12d based e.g. on said GPU resource metrics and said set of GPU acceleration requirements.

The first and second orchestrators 100, 100' may further respectively comprise a first controller and a second controller (not shown). The first and second controllers may respectively employ, based on a request received from the first and second master schedulers 110, 110', routing between at least two nodes of the three filtered first nodes 11a-11c and between at least two nodes of the four filtered second nodes 12a-12d, according to the creation of the first network slice 11 and of the second network slice 12. Preferably, the first and second controllers employ routing between said at least two nodes dynamically.

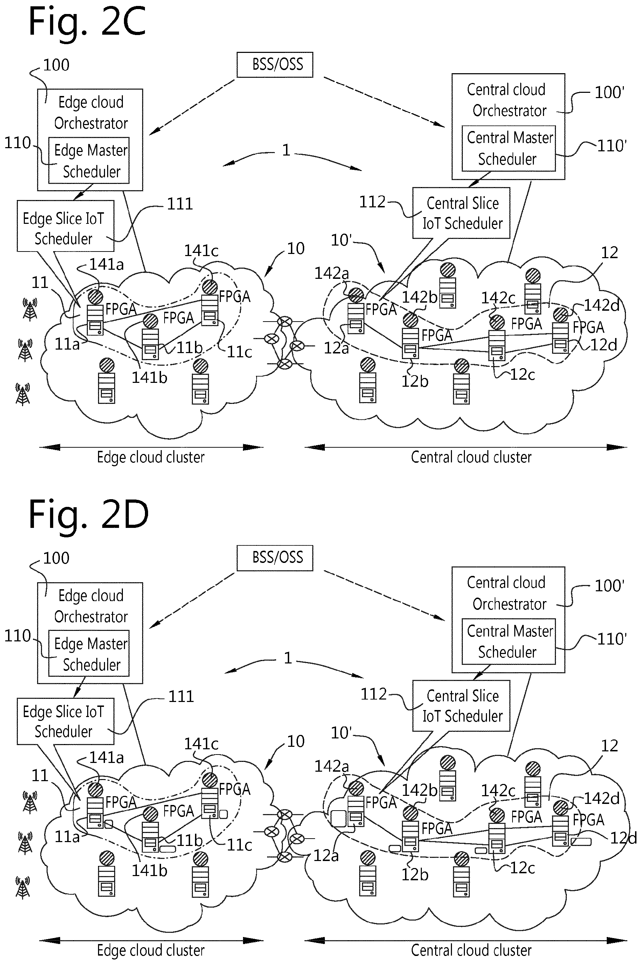

As illustrated in Figure 2C, and in accordance with Step 2 of the associated method, the first master scheduler 110 creates the first slice scheduler 111 according to the creation of the first network slice 11. The second master scheduler 110' creates the second slice scheduler 112 according to the creation of the second network slice 12. At this stage, the system 1 comprises a first slice scheduler 111 operatively connected to the first network slice 11, and configured to monitor network resources associated with the first network slice 11, a second slice scheduler 112 operatively connected to said second network slice 12, and configured to monitor network resources associated with the second network slice 12, a first orchestrator 100 and a second orchestrator 100'. The first orchestrator 100 comprises said first master scheduler 110 operatively connected to the first slice scheduler 111, and configured to instantiate the first slice scheduler 111. The second orchestrator 100' comprises said second master scheduler 110' operatively connected to the second slice scheduler 112, and configured to instantiate the second slice scheduler 112. Preferably, the first and second master schedulers 110, 110' respectively create the first slice scheduler 111 and the second slice scheduler 112 dynamically.

According to the ranking of the three filtered first nodes 11a-11c and of the four filtered second nodes 12a-12d respectively performed by the first and second master schedulers 110, 110' based e.g. on said GPU resource metrics and said set of GPU acceleration requirements, the first and second master schedulers 110, 110' may respectively perform optimization placements of the first and second slice schedulers 111, 112 on the most appropriate node of said filtered nodes.

The first and second master schedulers 110, 110' respectively transmit said scheduling instructions to the first slice scheduler 111 and the second slice scheduler 112. For each network slice 11, 12, the corresponding slice scheduler 111, 112 may use different scheduling algorithms and different scheduling metrics. For each network slice 11, 12, the corresponding slice scheduler 111, 112 may also use the same scheduling algorithm and the same scheduling metrics, e.g. in the present case the Best Fit algorithm together with the GPU acceleration scheduling metrics.

Alternatively or additionally, the first slice scheduler 111 and second slice scheduler 112 may respectively receive from the database(s) the resource metrics with respect to the five first nodes 11a-11e and the eight second nodes 12a-12h, and respectively receive from the first and second master schedulers 110, 110' the corresponding scheduling instructions. Further, the first slice scheduler 111 and second slice scheduler 112 may respectively filter the five first nodes 11a-11e and the eight second nodes 12a-12h based on said resource metrics and said set of GPU acceleration requirements, and may respectively allocate resources to at least one node of the three filtered first nodes 11a-11c and to at least one node of the four filtered second nodes 12a-12d. Moreover, the first slice scheduler 111 and second slice scheduler 112 may respectively reject nodes from the five first nodes 11a-11e and the eight second nodes 12a-12h if the resource metrics of said nodes do not fulfill said set of requirements. The first slice scheduler 111 and second slice scheduler 112 may also respectively rank said at least one node of the three filtered first nodes 11a-11c and said at least one node of the four filtered second nodes 12a-12d based e.g. on said GPU resource metrics and said set of GPU acceleration requirements.

As illustrated in Figure 2D, and in accordance with Step 3 of the associated method, the first slice scheduler 111 and the second slice scheduler 112 respectively receive a deployment request of instances of the first network slice 11 and the second network slice 12. The first slice scheduler 111 and the second slice scheduler 112 respectively perform optimization placements for said instances of the first network slice 11 and the second network slice 12 based on said transmitted scheduling instructions. It is seen in Figure 2D that said optimization placements lead to a non-uniform repartition of the instances on the three filtered first nodes 11a-11c, and to a non-uniform repartition of the instances on the four filtered second nodes 12a-12d, following the resources available on said filtered nodes.

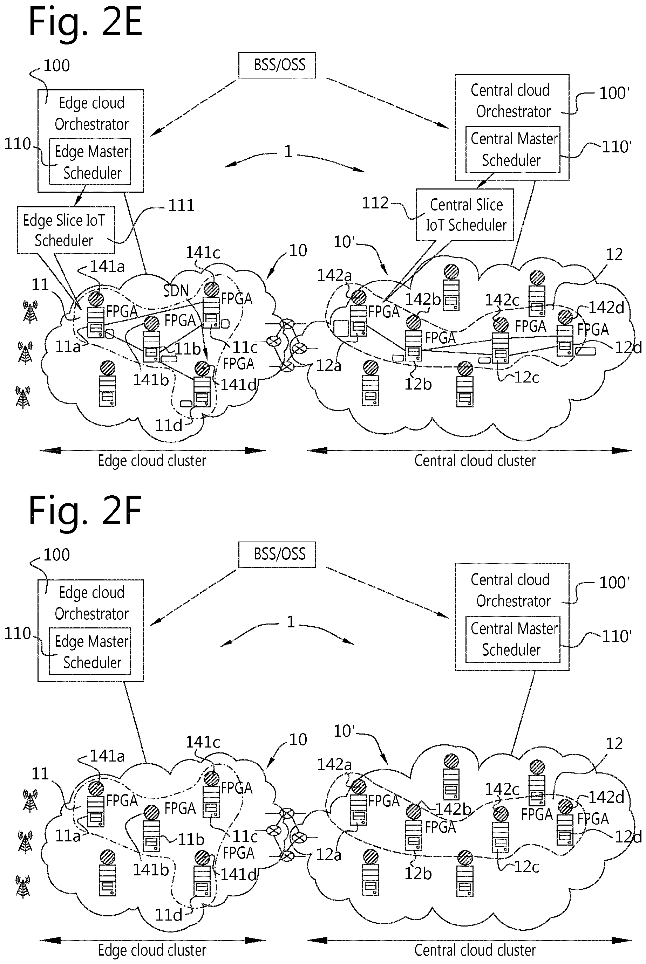

As illustrated in Figure 2E, and in accordance with Step 4 of the associated method, the first and second master schedulers 110, 110' respectively evaluate resource demands of the first network slice 11 and of the second network slice 12. Further, the first and second master schedulers 110, 110' respectively add or release resource to the first network slice 11 and the second network slice 12 based on said evaluated resource demands. In the embodiment of Figure 2E, a fourth node 11e is added to the existing three filtered first nodes 11a-11c, based on the evaluated resource demands of the first network slice 11. The first controller may employ, based on a request received from the first master scheduler 110, routing between at least two nodes of the four filtered first nodes 11a-11d and between at least one node of the three existing filtered second nodes 12a-12c and said fourth node 11e. Preferably, the first controller employs routing between said at least two nodes dynamically. By contrast, no further node is required to be added to the existing four filtered second nodes 12a-12d, based on the evaluated resource demands of the second network slice 12.

Alternatively or additionally, the first slice scheduler 111 and the second slice scheduler 112 may respectively evaluate resource demands of the first network slice 11 and the second network slice 12, and may respectively request the first and second master schedulers 110, 110' to add or release resource to the first network slice 11 and the second network slice 12 based on said evaluated resource demands.

If one of the first and second master schedulers 110, 110', or both of them, fails to evaluate resource demands of the first network slice 11 and/or of the second network slice 12, the system 1 enables the default election of one of the first and second slice schedulers 111, 112, or both of them, in order to replace at least one of the first and second master schedulers 110, 110'. Moreover, if for example the first slice scheduler 111 lacks resource, the system 1 enables the corresponding master scheduler 110 to operatively connect with the second slice scheduler 110', to withdraw the necessary resource from the second slice scheduler 110', and to provide the first slice scheduler 110 with said withdrawn necessary resource. In addition, the system 1 enables to provide a certain priority to the first slice scheduler 111 or to the second slice scheduler 112, and/or to provide a certain priority to the first master scheduler 110 or to the second master scheduler 110'.

As illustrated in Figure 2F, and in accordance with Step 5 of the associated method, the first orchestrator 100 deletes the first network slice 11. The second orchestrator 100' deletes the second network slice 12. The first master scheduler 110 deletes the first slice scheduler 111 according to the deletion of the first network slice 11. The second master scheduler 110' deletes the second slice scheduler 112 according to the deletion of the second network slice 12. The first slice scheduler 111 and the second slice scheduler 112 respectively delete instances in the four filtered first nodes 11a-11d and in the four filtered second nodes 12a-12d, according to the deletion of the first network slice 11 and the second network slice 12. At this stage the system 1 only comprises a first orchestrator 100 comprising a first master scheduler 110 associated with the edge cloud cluster, and a second orchestrator 100' comprising a second master scheduler 110' associated with the central cloud cluster, as it was the case in Figure 2A.

The first and second controllers may respectively reset, based on a request received from the first and second master schedulers 110, 110', routing between at least two nodes of the four filtered first nodes 11a-11d and between at least two nodes of the four filtered second nodes 12a-12d, according to the deletion of the first network slice 11 and the second network slice 12. Preferably, the first and second controllers reset routing between said at least two nodes dynamically.

As illustrated in Figures 2A-2F, the system 1 may further comprise a plurality of first agents operatively connected to the first communication network 10 and to the first slice scheduler 111, and a plurality of second agents operatively connected to the second telecommunication network 10' and to the second slice scheduler 112. In the embodiments of Figures 2A-2F, the system 1 comprises five first agents 141a-141e, each being operatively connected to each of the five first nodes 11a-11e of the first communication network 10, and eight second agents 142a-142h, each being operatively connected to each of the eight second nodes 12a-12h of the second communication network 10'. The five first agents 141a-141e and the eight second agents 142a-142h may respectively receive a request from the first slice scheduler 111 and from the second slice scheduler 112 to create and delete instances of the first network slice 11 and the second network slice 12. Further, the five first agents 141a-141e and the eight second agents 142a-142h may restart an instance of the first network slice 11 and the second network slice 12 that has been shut down, and may notify the first slice scheduler 111 and the second slice scheduler 112. They may also collect resource metrics from the five first nodes 11a-11e in the first communication network slice 10 and the eight second nodes 12a-12h in the second communication network 10', and send said resource metrics respectively to the first orchestrator 100 and to the second orchestrator 100'.

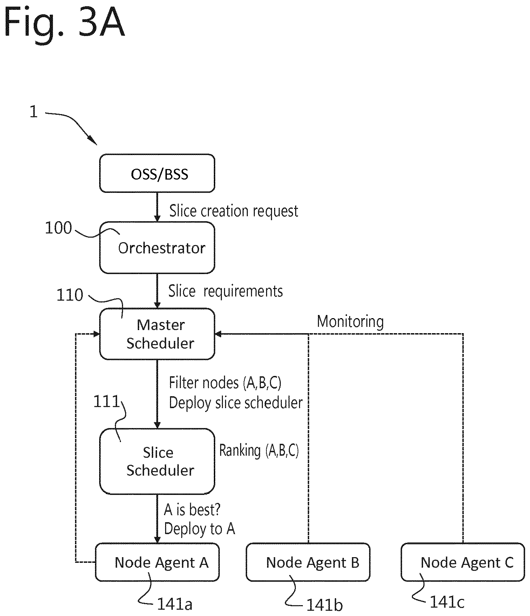

Figures 3A-3E respectively illustrate schematically two exemplary embodiments of a system and a method for managing network resources in a communication network.

As illustrated in Figure 3A, the system 1 comprises an orchestrator 100 comprising a master scheduler 110. An OSS/BSS request is sent to the orchestrator 100 to create a network slice (not shown) of the communication network (not shown). The communication network may correspond to a 5G network. The communication network may deal with the SDN technology. The orchestrator 100 creates the network slice, and is configured to perform a deployment of instances of the network slice. The orchestrator 100 may further comprise a database (not shown) configured to store data. The master scheduler 110 may collect resource metrics stored in said database from three nodes (not shown) comprised in the communication network. The master scheduler 110 may collect a set of requirements stored in said database to be satisfied by the communication network with respect to the network slice. The master scheduler 110 configures scheduling instructions based on said resource metrics and said set of requirements. The master scheduler 110 filters the three nodes based on said resource metrics and said set of requirements. After filtering, three filtered nodes are comprised in the network slice. The master scheduler 110 allocates resources to the three filtered nodes. The master scheduler 110 ranks the three filtered nodes based on said resource metrics and said set of requirements. The master scheduler 110 creates the slice scheduler 111 according to the creation of the network slice. According to the ranking of the three filtered nodes performed by the master scheduler 110 based on said resource metrics and said set of requirements, the master scheduler 110 may perform optimization placements of the slice scheduler 111 on the most appropriate node of said three filtered nodes. The master scheduler 110 transmits said scheduling instructions to the slice scheduler 111. The slice scheduler 111 receives a deployment request of instances of the network slice. The slice scheduler 111 performs optimization placements for said instances of the network slice based on said transmitted scheduling instructions. It is seen in Figure 3A that said optimization placements lead to deploy the instances on one filtered node out of the three filtered nodes. The system 1 also comprises three agents 141a-141c, each being operatively connected to each of the three nodes of the communication network. The slice scheduler 111 may request the first agent 141a to deploy instances on the first node, if said first node is the most appropriate node of said three filtered nodes.

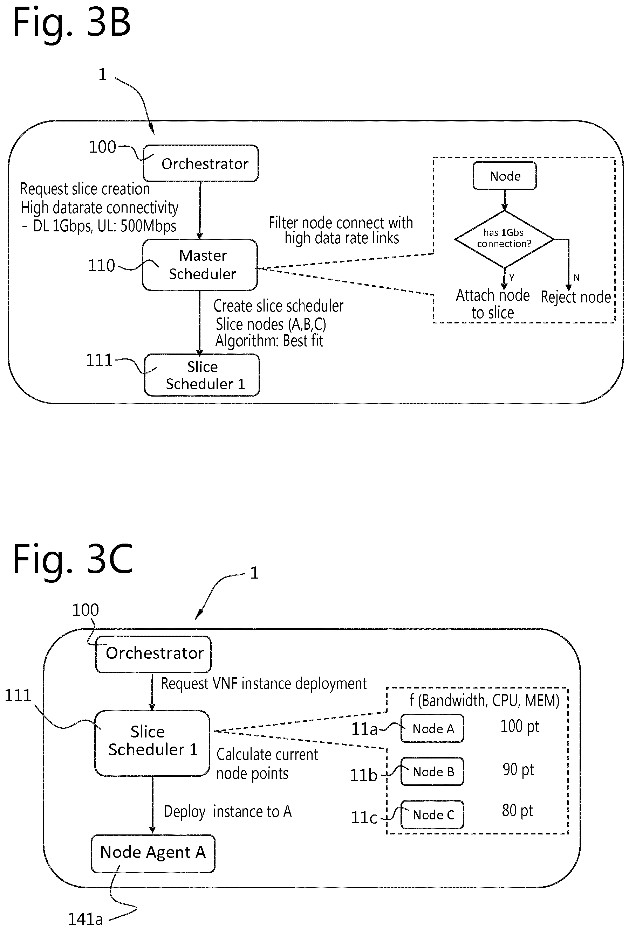

As illustrated in Figure 3B, a request, for example an OSS/BSS request, is sent to the orchestrator 100 to create a first network slice 11 in the communication network, with indoor ultra-high broadband access for AR/VR live broadcasting. The set of requirements with respect to the first network slice 11 comprises high data rate connectivity, a DL speed of at least 1 Gbps, and an UL speed of at least 500 Mbps. The orchestrator 100 creates the first network slice 11, and is configured to perform a deployment of instances of the first network slice 11. The master scheduler 110 configures scheduling instructions by e.g. configuring the Best Fit algorithm, based on collected resource metrics from three nodes 11a-11c in the communication network, and based on said set of requirements with respect to the first network slice 11. The master scheduler 110 filters the three nodes 11a-11c based on said resource metrics and said set of requirements. If one of the three nodes 11a-11c satisfies at least 1Gbps connection for the DL speed, said node is selected by the master scheduler 110; otherwise said node is rejected by the master scheduler 110. The master scheduler 110 creates the first slice scheduler 111 according to the creation of the first network slice 11.

As illustrated in Figure 3C, the orchestrator 100 requests Virtual Network Function (VNF) instance deployment to the first slice scheduler 111. The first slice scheduler 111 evaluates the resource of the three nodes 11a-11c as functions of e.g. the bandwidth, the CPU, and the memory demands of the first network slice 11. In the present case, the requirement of the first network slice 11 is the ultra-high broadband, i.e. ultra-wide-bandwidth access for AR/VR live broadcasting. The most suitable node is the node 11a. The system 1 also comprises three agents 141a-141c, each being operatively connected to each of the three nodes 11a-11c of the communication network. The first slice scheduler 111 may then request the agent 141a to deploy instances on the node 11a.

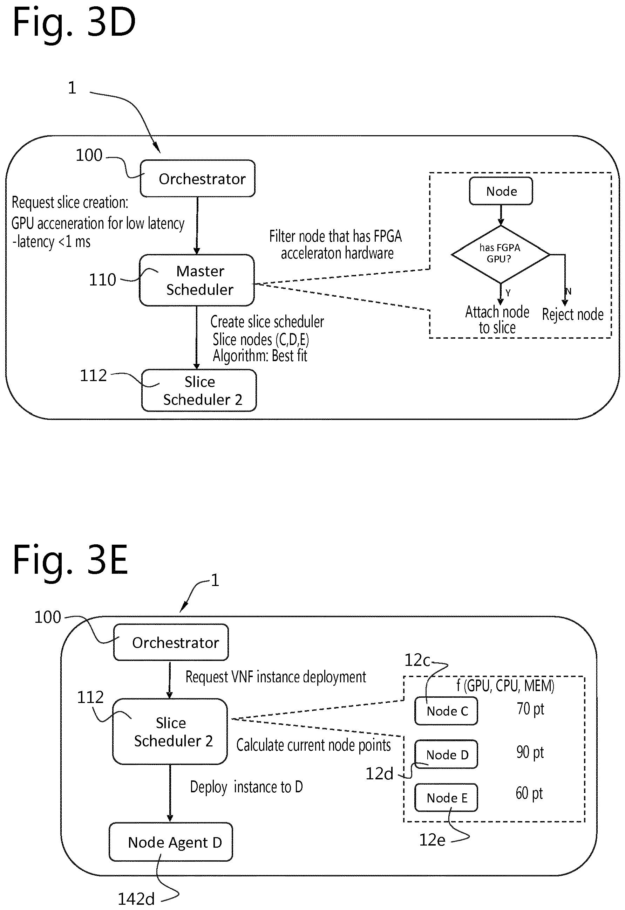

As illustrated in Figure 3D, a request, for example an OSS/BSS request, is sent to the orchestrator 100 to create a second network slice 12 in the communication network, with ultra-high reliability and ultra-low latency for connected cars. The set of requirements with respect to the second network slice 12 comprises high data rate connectivity, a latency of at most 1 ms, and mobility. The orchestrator 100 creates the second network slice 12, and is configured to perform a deployment of instances of the second network slice 12. The master scheduler 110 configures scheduling instructions by e.g. configuring the Best Fit algorithm, based on collected resource metrics from three nodes 12c-12e in the communication network, and based on said set of requirements with respect to the second network slice 12. The node 12c may be the same as the one mentioned in Figures 3B-3C, and the nodes 12d, 12e may be a fourth node and a fifth node in the communication network different from the node 11a mentioned in Figures 3B-3C. The master scheduler 110 filters the three nodes 12c-12e based on said resource metrics and said set of requirements. If one of the three nodes 12c-12e possesses e.g. an FPGA functionality with GPU performance satisfying a latency of at most 1ms, said node is selected by the master scheduler 110; otherwise said node is rejected by the master scheduler 110. The master scheduler 110 creates the second slice scheduler 112 according to the creation of the second network slice 12.

As illustrated in Figure 3E, the orchestrator 100 requests VNF instance deployment to the second slice scheduler 112. The second slice scheduler 112 evaluates the resource of the three nodes 12c-12e as functions of e.g. the GPU, the CPU, and the memory demands of the second network slice 12. The most suitable node is the node 12d. The system 1 also comprises three agents 142c-142e, each being operatively connected to each of the three nodes 12c-12e of the communication network. The second slice scheduler 112 may then request the agent 142d to deploy instances on the node 12d.

Whilst the principles of the invention have been set out above in connection with specific embodiments, it is to be understood that this description is merely made by way of example and not as a limitation of the scope of protection which is determined by the appended claims.

## Claims

1. A system for managing network resources in a communication network (10) comprising a first network slice (11) and a second network slice (12), said system comprising:
- a first slice scheduler (111) operatively connected to said first network slice (11), and configured to monitor network resources associated with the first network slice (11);
- a second slice scheduler (112) operatively connected to said second network slice (12), and configured to monitor network resources associated with the second network slice (12); and
- an orchestrator (100) configured to create said first network slice (11) and said second network slice (12), and to perform a deployment of instances of the first network slice (11) and of the second network slice (12), said orchestrator (100) comprising:
a master scheduler (110) operatively connected to said first slice scheduler (111) and to said second slice scheduler (112), and configured to instantiate the first slice scheduler (111) and the second slice scheduler (112);
wherein the orchestrator (100) further comprises a database (120) configured to store data, and wherein the master scheduler (110) is configured to:
- collect resource metrics stored in said database (120) from a plurality of first nodes comprised in the first network slice (11a, 11b, etc.) and a plurality of second nodes comprised in the second network slice (12a, 12b, etc.) in the communication network (10), wherein the collected resource metrics comprise at least one of a current memory usage and a current available memory, a current Central Processing Unit, CPU, usage and a current available CPU of said first and second nodes;
- collect a set of requirements stored in said database (120) to be satisfied by the communication network (10) with respect to the first network slice (11) and the second network slice (12), wherein the set of requirements include one or more or a combination of a data rate, a download speed, an upload speed, a reliability, a latency, a bandwidth data transmission, a Graphics Processing Unit, GPU, performance;
- configure scheduling instructions based on said resource metrics and said set of requirements; and
- transmit said scheduling instructions to the first slice scheduler (111) and the second slice scheduler (112);
wherein the first slice scheduler (111) and the second slice scheduler (112) are respectively configured to:
- receive a deployment request of instances of the first network slice (11) and the second network slice (12); and
- perform optimization placements for said instances of the first network slice (11) and the second network slice (12) based on said transmitted scheduling instructions.

2. The system according to claim 1, wherein the orchestrator (100) is configured to create and delete said first network slice (11) and said second network slice (12); and
wherein the master scheduler (110) is configured to create or delete said first slice scheduler (111) according to the creation or deletion of the first network slice (11), and to create or delete said second slice scheduler (112) according to the creation or deletion of the second network slice (12); and/or
wherein the orchestrator (100) is configured to perform said deployments of instances of the first network slice (11) and of the second network slice (12) independently from each other.

3. The system according to claim 1, wherein the master scheduler (110) is configured to:
- filter said plurality of first nodes (11a, 11b, etc.) and said plurality of second nodes (12a, 12b, etc.) based on said resource metrics and said set of requirements, and
- allocate resources to at least one node in the first network slice (11) of said filtered plurality of first nodes (11a, 11b, etc.) and to at least one node in the second network slice (12) of said filtered plurality of second nodes (12a, 12b, etc.); and/or
wherein the first slice scheduler (111) and the second slice scheduler (112) are respectively configured to:
- receive from the database (120) the resource metrics with respect to a plurality of first nodes (11a, 11b, etc.) and a plurality of second nodes (12a, 12b, etc.) in the communication network (10),
- receive from the master scheduler (110) the corresponding scheduling instructions,
- filter said plurality of first nodes (11a, 11b, etc.) and said plurality of second nodes (12a, 12b, etc.) based on said resource metrics and said set of requirements, and
- allocate resources to at least one node in the first network slice (11) of said filtered plurality of first nodes (11a, 11b, etc.) and to at least one node in the second network slice (12) of said filtered plurality of second nodes (12a, 12b, etc.).

4. The system according to claim 3, wherein the master scheduler (110) is configured to:
- reject nodes from said plurality of first nodes (11a, 11b, etc.) and said plurality of second nodes (12a, 12b, etc.) if the resource metrics of said nodes do not fulfill said set of requirements, and
- rank said at least one node of the filtered plurality of first nodes (11a, 11b, etc.) and said at least one node of the filtered plurality of second nodes (12a, 12b, etc.) based on said resource metrics and said set of requirements; and/or
wherein the first slice scheduler (111) and the second slice scheduler (112) are respectively configured to:
- reject nodes from said plurality of first nodes (11a, 11b, etc.) and said plurality of second nodes (12a, 12b, etc.) if the resource metrics of said nodes do not fulfill said set of requirements, and
- rank said at least one node of the filtered plurality of first nodes (11a, 11b, etc.) and said at least one node of the filtered plurality of second nodes (12a, 12b, etc.) based on said resource metrics and said set of requirements.

5. The system according to any one of the previous claims, wherein the master scheduler (110) is configured to:
- evaluate resource demands of the first network slice (11) and the second network slice (12), and
- add or release resource to the first network slice (11) and the second network slice (12) based on said evaluated resource demands; and/or
wherein the first slice scheduler (111) and the second slice scheduler (112) are respectively configured to:
- evaluate resource demands of the first network slice (11) and the second network slice (12), and
- request the master scheduler (110) to add or release resource to the first network slice (11) and the second network slice (12) based on said evaluated resource demands.

6. The system according to any one of claims 3-5, wherein the orchestrator (100) further comprises a controller (130) configured to:
- employ, based on a request received from said master scheduler (110), routing between at least two nodes of said filtered plurality of first nodes (11a, 11b, etc.) and between at least two nodes of said filtered plurality of second nodes (12a, 12b, etc.) according to the creation of said first network slice (11) and said second network slice (12), and
- reset, based on a request received from said master scheduler (110), routing between at least two nodes of said filtered plurality of first nodes (11a, 11b, etc.) and between at least two nodes of said filtered plurality of second nodes (12a, 12b, etc.) according to the deletion of said first network slice (11) and said second network slice (12); and
wherein the first slice scheduler (111) and the second slice scheduler (112) are respectively configured to delete instances in said at least one node of said filtered plurality of first nodes (11a, 11b, etc.) and said at least one node of said filtered plurality of second nodes (12a, 12b, etc.) according to the deletion of said first network slice (11) and said second network slice (12).

7. The system according to any one of the previous claims, further comprising a plurality of first agents (141a, 141b, etc.) operatively connected to the communication network (10) and to the first slice scheduler (111), and a plurality of second agents (142a, 142b, etc.) operatively connected to the communication network (10) and to the second slice scheduler (112), said plurality of first agents (141a, 141b, etc.) and said plurality of second agents (142a, 142b, etc.) being respectively configured to:
- receive a request from said first slice scheduler (111) and said second slice scheduler (112) to create and delete instances of the first network slice (11) and the second network slice (12);
- restart an instance of the first network slice (11) and the second network slice (12) that has been shut down, and notify the first slice scheduler (111) and the second slice scheduler (112); and
- collect resource metrics from a plurality of first nodes (11a, 11b, etc.) and a plurality of second nodes (12a, 12b, etc.) in the communication network (10), and send said resource metrics to the orchestrator (100).

8. A method for managing network resources in a communication network (10) comprising a first network slice (11) and a second network slice (12), said method comprising:
- collecting, at a master scheduler (110), and storing, at a database (120), resource metrics from a plurality of first nodes comprised in the first network slice (11a, 11b, etc.) and a plurality of second nodes comprised in the second network slice (12a, 12b, etc.) in the communication network (10), wherein the collected resource metrics comprise at least one of a current memory usage and a current available memory, a current Central Processing Unit, CPU, usage and a current available CPU of said first and second nodes;
- collecting, at said master scheduler (110), and storing, at said database (120), a set of requirements to be satisfied by the communication network (10) with respect to the first network slice (11) and the second network slice (12), wherein the set of requirements include one or more or a combination of a data rate, a download speed, an upload speed, a reliability, a latency, a bandwidth data transmission, a Graphics Processing Unit, GPU, performance;
- configuring, at said master scheduler (110), scheduling instructions based on said resource metrics and said set of requirements; and
- transmitting said scheduling instructions from said master scheduler (110) to a first slice scheduler (111) and a second slice scheduler (112) operatively connected to said master scheduler (110), said first slice scheduler (111) being operatively connected to said first network slice (11), and said second slice scheduler (112) being operatively connected to said second network slice (12);
- receiving respectively by the first slice scheduler (111) and the second slice scheduler (112) a deployment request of instances of the first network slice (11) and the second network slice (12); and
- performing respectively by the first slice scheduler (111) and the second slice scheduler (112) optimization placements for instances of the first network slice (11) and the second network slice (12) based on said transmitted scheduling instructions.

9. The method according to claim 8, further comprising:
- filtering, at said master scheduler (110), said plurality of first nodes (11a, 11b, etc.) and said plurality of second nodes (12a, 12b, etc.) based on said resource metrics and said set of requirements, and
- allocating, at said master scheduler (110), resources to at least one node in the first network slice (11) of said filtered plurality of first nodes (11a, 11b, etc.) and to at least one node in the second network slice (12) of said filtered plurality of second nodes (12a, 12b, etc.); and/or
- receiving, respectively at said first slice scheduler (111) and said second slice scheduler (112), from the database (120) resource metrics with respect to a plurality of first nodes (11a, 11b, etc.) and a plurality of second nodes (12a, 12b, etc.) in the communication network (10),
- receiving, respectively at said first slice scheduler (111) and said second slice scheduler (112), from the master scheduler (110) the corresponding scheduling instructions,
- filtering, respectively at said first slice scheduler (111) and said second slice scheduler (112), said plurality of first nodes (11a, 11b, etc.) and said plurality of second nodes (12a, 12b, etc.) based on said resource metrics and said set of requirements, and
- allocating, respectively at said first slice scheduler (111) and said second slice scheduler (112), resources to at least one node in the first network slice (11) of said filtered plurality of first nodes (11a, 11b, etc.) and to at least one node in the second network slice (12) of said filtered plurality of second nodes (12a, 12b, etc.).

10. The method according to claim 9, further comprising:
- rejecting, at said master scheduler (110), nodes from said plurality of first nodes (11a, 11b, etc.) and said plurality of second nodes (12a, 12b, etc.) if the resource metrics of said nodes do not fulfill said set of requirements, and
- ranking, at said master scheduler (110), said at least one node of the filtered plurality of first nodes (11a, 11b, etc.) and said at least one node of the filtered plurality of second nodes (12a, 12b, etc.) based on said resource metrics and said set of requirements; and/or
- rejecting, respectively at said first slice scheduler (111) and said second slice scheduler (112), nodes from said plurality of first nodes (11a, 11b, etc.) and said plurality of second nodes (12a, 12b, etc.) if the resource metrics of said nodes do not fulfill said set of requirements, and
- ranking, respectively at said first slice scheduler (111) and said second slice scheduler (112), said at least one node of the filtered plurality of first nodes (11a, 11b, etc.) and said at least one node of the filtered plurality of second nodes (12a, 12b, etc.) based on said resource metrics and said set of requirements.

11. The method according to any one of claims 8-10, further comprising:
- receiving, respectively at said first slice scheduler (111) and said second slice scheduler (112), a deployment request of instances of the first network slice (11) and the second network slice (12); and
- performing, respectively at said first slice scheduler (111) and said second slice scheduler (112), optimization placements for said instances of the first network slice (11) and the second network slice (12) based on said transmitted scheduling instructions.

12. The method according to any one of claims 8-11, further comprising:
- evaluating, at said master schedule, resource demands of the first network slice (11) and the second network slice (12), and
- adding or releasing, at said master schedule, resource to the first network slice (11) and the second network slice (12) based on said evaluated resource demands; and/or
- evaluating, respectively at said first slice scheduler (111) and said second slice scheduler (112), resource demands of the first network slice (11) and the second network slice (12), and
- requesting, respectively at said first slice scheduler (111) and said second slice scheduler (112), the master scheduler (110) to add or release resource to the first network slice (11) and the second network slice (12) based on said evaluated resource demands.

13. The method according to any one of claims 8-12, further comprising:
- employing, at a controller (130), based on a request received from said master scheduler (110), routing between at least two nodes of said filtered plurality of first nodes (11a, 11b, etc.) and between at least two nodes of said filtered plurality of second nodes (12a, 12b, etc.) according to the creation of said first network slice (11) and said second network slice (12), and
- resetting, at said controller (130), based on a request received from said master scheduler (110), routing between at least two nodes of said filtered plurality of first nodes (11a, 11b, etc.) and between at least two nodes of said filtered plurality of second nodes (12a, 12b, etc.) according to the deletion of said first network slice (11) and said second network slice (12); and
- deleting, respectively at said first slice scheduler (111) and said second slice scheduler (112), instances in said at least one node of said filtered plurality of first nodes (11a, 11b, etc.) and said at least one node of said filtered plurality of second nodes (12a, 12b, etc.) according to the deletion of said first network slice (11) and said second network slice (12).

## Patentansprüche

1. System zur Verwaltung von Netzwerkressourcen in einem Kommunikationsnetz (10), das einen ersten Netzwerk-Slice (11) und einen zweite Netzwerk-Slice (12) umfasst, wobei das System Folgendes umfasst:
- einen ersten Slice-Scheduler (111), der operativ mit dem ersten Netzwerk-Slice (11) verbunden und so konfiguriert ist, dass er die zu dem ersten Netzwerk-Slice (11) gehörigen Netzwerkressourcen überwacht;
- einen zweiten Slice-Scheduler (112), der operativ mit dem zweiten Netzwerk-Slice (12) verbunden und so konfiguriert ist, dass er die zu dem zweiten Netzwerk-Slice (12) gehörigen Netzwerkressourcen überwacht; und
- einen Orchestrator (100), der so konfiguriert ist, dass er das erste Netzwerk-Slice (11) und das zweite Netzwerk-Slice (12) erzeugt und eine Bereitstellung von Instanzen des ersten Netzwerk-Slice (11) und des zweiten Netzwerk-Slice (12) durchführt, wobei der Orchestrator (100) umfasst:
einen Master-Scheduler (110), der operativ mit dem ersten Slice-Scheduler (111) und dem zweiten Slice-Scheduler (112) verbunden und so konfiguriert ist, dass er den ersten Slice-Scheduler (111) und den zweiten Slice-Scheduler (112) instanziiert;
wobei der Orchestrator (100) ferner eine Datenbank (120) umfasst, die so konfiguriert ist, dass sie Daten speichert, und wobei der Master-Scheduler (110) konfiguriert ist zum:
- Erfassen von in der Datenbank (120) gespeicherten Ressourcenmetriken aus einer Vielzahl von in dem ersten Netzwerk-Slice (11a, 11b, usw.) enthaltenen ersten Knoten und einer Vielzahl von in dem zweiten Netzwerk-Slice (12a, 12b, usw.) enthaltenen zweiten Knoten in dem Kommunikationsnetz (10), wobei die erfassten Ressourcenmetriken mindestens eines von einer aktuellen Speichernutzung und einem aktuellen verfügbaren Speicher, einer aktuellen Zentralverarbeitungseinheit (CPU)-Nutzung und einer aktuellen verfügbaren CPU des ersten und zweiten Knotens umfassen;
- Erfassen eines Satzes von in der Datenbank (120) gespeicherten Anforderungen, die vom Kommunikationsnetz (10) in Bezug auf das erste Netzwerk-Slice (11) und das zweite Netzwerk-Slice (12) zu erfüllen sind, wobei der Satz von Anforderungen eine oder mehrere oder eine Kombination aus einer Datenrate, einer Download-Geschwindigkeit, einer Upload-Geschwindigkeit, einer Zuverlässigkeit, einer Latenz, einer Bandbreiten-Datenübertragung, einer Leistung einer Grafikverarbeitungseinheit (GPU) umfasst;
- Konfigurieren von Planungsanweisungen basierend auf den Ressourcenmetriken und dem Satz von Anforderungen; und
- Übermitteln der Planungsanweisungen an den ersten Slice-Scheduler (111) und den zweiten Slice-Scheduler (112);
wobei der erste Slice-Scheduler (111) und der zweite Slice-Scheduler (112) jeweils konfiguriert sind zum:
- Empfangen einer Bereitstellungsanforderung von Instanzen des ersten Netzwerk-Slice (11) und des zweiten Netzwerk-Slice (12); und
- Durchführen von Optimierungsplatzierungen für die Instanzen des ersten Netzwerk-Slice (11) und des zweiten Netzwerk-Slice (12) basierend auf den übermittelten Planungsanweisungen.

2. System nach Anspruch 1, wobei der Orchestrator (100) so konfiguriert ist, dass er das erste Netzwerk-Slice (11) und das zweite Netzwerk-Slice (12) erzeugt und löscht; und
wobei der Master-Scheduler (110) so konfiguriert ist, dass er den ersten Slice-Scheduler (111) entsprechend der Erzeugung oder Löschung des ersten Netzwerk-Slice (11) erzeugt oder löscht, und den zweiten Slice-Scheduler (112) entsprechend der Erzeugung oder Löschung des zweiten Netzwerk-Slice (12) erzeugt oder löscht; und/oder
wobei der Orchestrator (100) so konfiguriert ist, dass er die Bereitstellungen von Instanzen des ersten Netzwerk-Slice (11) und des zweiten Netzwerk-Slice (12) unabhängig voneinander durchführt.

3. System nach Anspruch 1, wobei der Master-Scheduler (110) konfiguriert ist zum:
- Filtern der Vielzahl von ersten Knoten (11a, 11b usw.) und der Vielzahl von zweiten Knoten (12a, 12b usw.) basierend auf den Ressourcenmetriken und dem Satz von Anforderungen, und
- Zuweisen von Ressourcen an mindestens einen Knoten in dem ersten Netzwerk-Slice (11) der gefilterten Vielzahl von ersten Knoten (11a, 11b usw.) und an mindestens einen Knoten in dem zweiten Netzwerk-Slice (12) der gefilterten Vielzahl von zweiten Knoten (12a, 12b usw.); und/oder
wobei der erste Slice-Scheduler (111) und der zweite Slice-Scheduler (112) jeweils konfiguriert sind zum:
- Empfangen, von der Datenbank (120), der Ressourcenmetriken in Bezug auf eine Vielzahl von ersten Knoten (11a, 11b usw.) und eine Vielzahl von zweiten Knoten (12a, 12b usw.) in dem Kommunikationsnetz (10),
- Empfangen, von dem Master Scheduler (110), der entsprechenden Planungsanweisungen,
- Filtern der Vielzahl von ersten Knoten (11a, 11b usw.) und der Vielzahl von zweiten Knoten (12a, 12b usw.) basierend auf den Ressourcenmetriken und dem Satz von Anforderungen, und
- Zuweisen von Ressourcen an mindestens einen Knoten in dem ersten Netzwerk-Slice (11) der gefilterten Vielzahl von ersten Knoten (11a, 11b usw.) und an mindestens einen Knoten in dem zweiten Netzwerk-Slice (12) der gefilterten Vielzahl von zweiten Knoten (12a, 12b usw.).

4. System nach Anspruch 3, wobei der Master-Scheduler (110) konfiguriert ist zum:
- Zurückweisen von Knoten aus der Vielzahl der ersten Knoten (11a, 11b usw.) und der Vielzahl von zweiten Knoten (12a, 12b usw.), wenn die Ressourcenmetriken der Knoten den Satz von Anforderungen nicht erfüllen, und
- Einstufen des mindestens einen Knotens aus der gefilterten Vielzahl von ersten Knoten (11a, 11b usw.) und des mindestens einen Knotens aus der gefilterten Vielzahl von zweiten Knoten (12a, 12b usw.) basierend auf den Ressourcenmetriken und dem Satz von Anforderungen, und/oder
wobei der erste Slice-Scheduler (111) und der zweite Slice-Scheduler (112) jeweils konfiguriert sind zum:
- Zurückweisen von Knoten aus der Vielzahl der ersten Knoten (11a, 11b usw.) und der Vielzahl von zweiten Knoten (12a, 12b usw.), wenn die Ressourcenmetriken der Knoten den Satz von Anforderungen nicht erfüllen, und
- Einstufen des mindestens einen Knotens aus der gefilterten Vielzahl von ersten Knoten (11a, 11b usw.) und des mindestens einen Knotens aus der gefilterten Vielzahl von zweiten Knoten (12a, 12b usw.) basierend auf den Ressourcenmetriken und dem Satz von Anforderungen.

5. System nach einem der vorstehenden Ansprüche, wobei der Master-Scheduler (110) konfiguriert ist zum:
- Bewerten des Ressourcenbedarfs des ersten Netzwerk-Slice (11) und des zweiten Netzwerk-Slice (12), und
- Hinzufügen oder Freigeben von Ressourcen zu dem ersten Netzwerk-Slice (11) und dem zweiten Netzwerk-Slice (12) basierend auf dem bewerteten Ressourcenbedarf; und/oder
wobei der erste Slice-Scheduler (111) und der zweite Slice-Scheduler (112) jeweils konfiguriert sind zum:
- Bewerten des Ressourcenbedarfs des ersten Netzwerk-Slice (11) und des zweiten Netzwerk-Slice (12), und
- Auffordern des Master-Schedulers (110) zum Hinzufügen oder Freigeben von Ressourcen zu dem ersten Netzwerk-Slice (11) und dem zweiten Netzwerk-Slice (12) basierend auf dem bewerteten Ressourcenbedarf.

6. System nach einem der Ansprüche 3 bis 5, wobei der Orchestrator (100) ferner einen Controller (130) umfasst, der konfiguriert ist zum:
- Verwenden, basierend auf einer von dem Master-Scheduler (110) empfangenen Anforderung, des Routings zwischen mindestens zwei Knoten der gefilterten Vielzahl von ersten Knoten (11a, 11b usw.) und zwischen mindestens zwei Knoten der gefilterten Vielzahl von zweiten Knoten (12a, 12b usw.) entsprechend der Erzeugung des ersten Netzwerk-Slice (11) und des zweiten Netzwerk-Slice (12), und
- Rücksetzen, basierend auf einer von dem Master-Scheduler (110) empfangenen Anforderung, des Routings zwischen mindestens zwei Knoten der gefilterten Vielzahl von ersten Knoten (11a, 11b usw.) und zwischen mindestens zwei Knoten der gefilterten Vielzahl von zweiten Knoten (12a, 12b usw.) entsprechend der Löschung des ersten Netzwerk-Slice (11) und des zweiten Netzwerk-Slice (12); und
wobei der erste Slice-Scheduler (111) und der zweite Slice-Scheduler (112) jeweils so konfiguriert sind, dass sie Instanzen in dem mindestens einen Knoten der gefilterten Vielzahl von ersten Knoten (11a, 11b usw.) und in dem mindestens einen Knoten der gefilterten Vielzahl von zweiten Knoten (12a, 12b usw.) entsprechend der Löschung des ersten Netzwerk-Slice (11) und des zweiten Netzwerk-Slice (12) löschen.

7. System nach einem der vorstehenden Ansprüche, ferner umfassend eine Vielzahl von ersten Agenten (141a, 141b usw.), die operativ mit dem Kommunikationsnetz (10) und dem ersten Slice-Scheduler (111) verbunden sind, und eine Vielzahl von zweiten Agenten (142a, 142b usw.), die operativ mit dem Kommunikationsnetz (10) und dem zweiten Slice-Scheduler (112) verbunden sind, umfasst, wobei die Vielzahl von ersten Agenten (141a, 141b usw.) und die Vielzahl von zweiten Agenten (142a, 142b usw.) jeweils konfiguriert sind zum:
- Empfangen einer Anforderung von dem ersten Slice-Scheduler (111) und dem zweiten Slice-Scheduler (112) zum Erzeugen und Löschen von Instanzen des ersten Netzwerk-Slice (11) und des zweiten Netzwerk-Slice (12);
- Neustarten einer Instanz des ersten Netzwerk-Slice (11) und des zweiten Netzwerk-Slice (12), die heruntergefahren wurde, und Benachrichtigen des ersten Slice-Schedulers (111) und des zweiten Slice-Schedulers (112); und
- Erfassen von Ressourcenmetriken von einer Vielzahl von ersten Knoten (11a, 11b usw.) und einer Vielzahl von zweiten Knoten (12a, 12b usw.) im Kommunikationsnetz (10) und Senden der Ressourcenmetriken an den Orchestrator (100).

8. Verfahren zur Verwaltung von Netzwerkressourcen in einem Kommunikationsnetz (10), das einen ersten Netzwerk-Slice (11) und einen zweite Netzwerk-Slice (12) umfasst, wobei das Verfahren Folgendes umfasst:
- Erfassen, an einem Master-Scheduler (110), und Speichern, in einer Datenbank (120), von Ressourcenmetriken von einer Vielzahl von in dem ersten Netzwerk-Slice (11a, 11b, usw.) enthaltenen ersten Knoten und einer Vielzahl von in dem zweiten Netzwerk-Slice (12a, 12b, usw.) enthaltenen zweiten Knoten in dem Kommunikationsnetz (10), wobei die erfassten Ressourcenmetriken mindestens eines von einer aktuellen Speichernutzung und einem aktuellen verfügbaren Speicher, einer aktuellen Zentralverarbeitungseinheit (CPU)-Nutzung und einer aktuellen verfügbaren CPU des ersten und zweiten Knotens umfassen;
- Erfassen, an dem Master-Scheduler (110), und Speichern, in der Datenbank (120), eines Satzes von Anforderungen, die vom Kommunikationsnetz (10) in Bezug auf das erste Netzwerk-Slice (11) und das zweite Netzwerk-Slice (12) zu erfüllen sind, wobei der Satz von Anforderungen eine oder mehrere oder eine Kombination aus einer Datenrate, einer Download-Geschwindigkeit, einer Upload-Geschwindigkeit, einer Zuverlässigkeit, einer Latenz, einer Bandbreiten-Datenübertragung, einer Leistung einer Grafikverarbeitungseinheit (GPU) umfasst;
- Konfigurieren, an dem Master-Scheduler (110), von Planungsanweisungen basierend auf den Ressourcenmetriken und dem Satz von Anforderungen; und
- Übermitteln der Planungsanweisungen von dem Master-Scheduler (110) an einen ersten Slice-Scheduler (111) und einen zweiten Slice-Scheduler (112), die operativ mit dem Master-Scheduler (110) verbunden sind, wobei der erste Slice-Scheduler (111) operativ mit dem ersten Netzwerk-Slice (11) verbunden ist und der zweite Slice-Scheduler (112) operativ mit dem zweiten Netzwerk-Slice (12) verbunden ist;
- Empfangen, jeweils durch den ersten Slice-Scheduler (111) und den zweiten Slice-Scheduler (112) einer Bereitstellungsanforderung von Instanzen des ersten Netzwerk-Slice (11) und des zweiten Netzwerk-Slice (12); und
- Durchführen, jeweils durch den ersten Slice-Scheduler (111) und den zweiten Slice-Scheduler (112), von Optimierungsplatzierungen für Instanzen des ersten Netzwerk-Slice (11) und des zweiten Netzwerk-Slice (12) basierend auf den übermittelten Planungsanweisungen.

9. Verfahren nach Anspruch 8, ferner umfassend:
- Filtern, an dem Master-Scheduler (110), der Vielzahl von ersten Knoten (11a, 11b usw.) und der Vielzahl von zweiten Knoten (12a, 12b usw.) basierend auf den Ressourcenmetriken und dem Satz von Anforderungen, und
- Zuweisen, an dem Master-Scheduler (110), von Ressourcen an mindestens einen Knoten in dem ersten Netzwerk-Slice (11) der gefilterten Vielzahl von ersten Knoten (11a, 11b usw.) und an mindestens einen Knoten in dem zweiten Netzwerk-Slice (12) der gefilterten Vielzahl von zweiten Knoten (12a, 12b usw.); und/oder
- Empfangen, jeweils an dem ersten Slice-Scheduler (111) und dem zweiten Slice-Scheduler (112), der Ressourcenmetriken in Bezug auf eine Vielzahl von ersten Knoten (11a, 11b usw.) und eine Vielzahl von zweiten Knoten (12a, 12b usw.) in dem Kommunikationsnetz (10) aus der Datenbank (120),
- Empfangen, jeweils an dem ersten Slice-Scheduler (111) und dem zweiten Slice-Scheduler (112), der entsprechenden Planungsanweisungen von dem Master-Scheduler (110),
- Filtern, jeweils an dem ersten Slice-Scheduler (111) und dem zweiten Slice-Scheduler (112), der Vielzahl von ersten Knoten (11a, 11b usw.) und der Vielzahl von zweiten Knoten (12a, 12b usw.) basierend auf den Ressourcenmetriken und dem Satz von Anforderungen, und
- Zuweisen, jeweils an dem ersten Slice-Scheduler (111) und dem zweiten Slice-Scheduler (112), von Ressourcen an mindestens einen Knoten in dem ersten Netzwerk-Slice (11) der gefilterten Vielzahl von ersten Knoten (11a, 11b usw.) und an mindestens einen Knoten in dem zweiten Netzwerk-Slice (12) der gefilterten Vielzahl von zweiten Knoten (12a, 12b usw.).

10. Verfahren nach Anspruch 9, ferner umfassend:
- Zurückweisen, an dem Master-Scheduler (110), von Knoten aus der Vielzahl der ersten Knoten (11a, 11b usw.) und der Vielzahl von zweiten Knoten (12a, 12b usw.), wenn die Ressourcenmetriken der Knoten den Satz von Anforderungen nicht erfüllen, und
- Einstufen, an dem Master-Scheduler (110), des mindestens einen Knotens aus der gefilterten Vielzahl von ersten Knoten (11a, 11b usw.) und des mindestens einen Knotens aus der gefilterten Vielzahl von zweiten Knoten (12a, 12b usw.) basierend auf den Ressourcenmetriken und dem Satz von Anforderungen, und/oder
- Zurückweisen, jeweils an dem ersten Slice-Scheduler (111) und dem zweiten Slice-Scheduler (112), der Knoten aus Vielzahl von ersten Knoten (11a, 11b usw.) und der Vielzahl von zweiten Knoten (12a, 12b usw.), wenn die Ressourcenmetriken der Knoten den Satz von Anforderungen nicht erfüllen, und
- Einstufen, jeweils an dem ersten Slice-Scheduler (111) und dem zweiten Slice-Scheduler (112), des mindestens einen Knotens aus der gefilterten Vielzahl von ersten Knoten (11a, 11b usw.) und des mindestens einen Knotens aus der gefilterten Vielzahl von zweiten Knoten (12a, 12b usw.) basierend auf den Ressourcenmetriken und dem Satz von Anforderungen.

11. Verfahren nach einem der Ansprüche 8 bis 10, ferner umfassend:
- Empfangen, jeweils an dem ersten Slice-Scheduler (111) und dem zweiten Slice-Scheduler (112), einer Bereitstellungsanforderung von Instanzen des ersten Netzwerk-Slice (11) und des zweiten Netzwerk-Slice (12); und
- Durchführen, jeweils durch den ersten Slice-Scheduler (111) und den zweiten Slice-Scheduler (112), von Optimierungsplatzierungen für Instanzen des ersten Netzwerk-Slice (11) und des zweiten Netzwerk-Slice (12) basierend auf den übermittelten Planungsanweisungen.

12. Verfahren nach einem der Ansprüche 8 bis 11, ferner umfassend:
- Bewerten, an dem Master-Scheduler, des Ressourcenbedarfs des ersten Netzwerk-Slice (11) und des zweiten Netzwerk-Slice (12), und
- Hinzufügen oder Freigeben, an dem Master-Scheduler, von Ressourcen zu dem ersten Netzwerk-Slice (11) und dem zweiten Netzwerk-Slice (12) basierend auf dem bewerteten Ressourcenbedarf; und/oder
- Bewerten, jeweils an dem ersten Slice-Scheduler (111) und dem zweiten Slice-Scheduler (112), des Ressourcenbedarfs des ersten Netzwerk-Slice (11) und des zweiten Netzwerk-Slice (12), und
- Auffordern, jeweils an dem ersten Slice-Scheduler (111) und dem zweiten Slice-Scheduler (112), des Master-Schedulers (110) zum Hinzufügen oder Freigeben von Ressourcen zu dem ersten Netzwerk-Slice (11) und dem zweiten Netzwerk-Slice (12) basierend auf dem bewerteten Ressourcenbedarf.

13. Verfahren nach einem der Ansprüche 8 bis 12, ferner umfassend:
- Verwenden, an einem Controller (130), basierend auf einer von dem Master-Scheduler (110) empfangenen Anforderung, des Routings zwischen mindestens zwei Knoten der gefilterten Vielzahl von ersten Knoten (11a, 11b usw.) und zwischen mindestens zwei Knoten der gefilterten Vielzahl von zweiten Knoten (12a, 12b usw.) entsprechend der Erzeugung des ersten Netzwerk-Slice (11) und des zweiten Netzwerk-Slice (12), und
- Rücksetzen, an dem Controller (130), basierend auf einer von dem Master-Scheduler (110) empfangenen Anforderung, des Routings zwischen mindestens zwei Knoten der gefilterten Vielzahl von ersten Knoten (11a, 11b usw.) und zwischen mindestens zwei Knoten der gefilterten Vielzahl von zweiten Knoten (12a, 12b usw.) entsprechend der Löschung des ersten Netzwerk-Slice (11) und des zweiten Netzwerk-Slice (12); und
- Löschen, jeweils an dem ersten Slice-Scheduler (111) und dem zweiten Slice-Scheduler (112), von Instanzen in dem mindestens einen Knoten der gefilterten Vielzahl von ersten Knoten (11a, 11b usw.) und in dem mindestens einen Knoten der gefilterten Vielzahl von zweiten Knoten (12a, 12b usw.) entsprechend der Löschung des ersten Netzwerk-Slice (11) und des zweiten Netzwerk-Slice (12).

## Revendications

1. Système de gestion de ressources réseau dans un réseau de communication (10) comprenant une première tranche de réseau (11) et une deuxième tranche de réseau (12), ledit système comprenant :
- un premier ordonnanceur de tranches (111) connecté fonctionnellement à ladite première tranche de réseau (11), et configuré pour surveiller des ressources réseau associées à la première tranche de réseau (11) ;
- un deuxième ordonnanceur de tranches (112) connecté fonctionnellement à ladite deuxième tranche de réseau (12), et configuré pour surveiller des ressources réseau associées à la deuxième tranche de réseau (12) ; et
- un orchestrateur (100) configuré pour créer ladite première tranche de réseau (11) et ladite deuxième tranche de réseau (12), et pour effectuer un déploiement d'instances de la première tranche de réseau (11) et de la deuxième tranche de réseau (12), ledit orchestrateur (100) comprenant :
un ordonnanceur principal (110) connecté fonctionnellement audit premier ordonnanceur de tranches (111) et audit deuxième ordonnanceur de tranches (112), et configuré pour instancier le premier ordonnanceur de tranches (111) et le deuxième ordonnanceur de tranches (112) ;
dans lequel l'orchestrateur (100) comprend en outre une base de données (120) configurée pour stocker des données, et dans lequel l'ordonnanceur principal (110) est configuré pour :
- collecter des mesures de ressources stockées dans ladite base de données (120) dans une pluralité de premiers noeuds (11a, 11b, etc.) compris dans la première tranche de réseau et une pluralité de deuxièmes noeuds (12a, 12b, etc.) compris dans la deuxième tranche de réseau dans le réseau de communication (10), dans lequel les mesures de ressources collectées comprennent au moins une parmi une utilisation de mémoire actuelle et une mémoire disponible actuelle, une utilisation d'unité centrale de traitement (CPU) actuelle et une CPU disponible actuelle desdits premier et deuxième noeuds ;
- collecter un jeu d'exigences stockées dans ladite base de données (120) devant être satisfaites par le réseau de communication (10) en ce qui concerne la première tranche de réseau (11) et la deuxième tranche de réseau (12), dans lequel le jeu d'exigences comporte un ou plusieurs parmi un débit de données, un débit descendant, un débit montant, une fiabilité, une latence, une transmission de données de bande passante, une performance d'unité de traitement graphique (GPU), ou une combination de ceux-ci ;
- configurer des instructions d'ordonnancement sur la base desdites mesures de ressources et dudit jeu d'exigences ; et
- transmettre lesdites instructions d'ordonnancement au premier ordonnanceur de tranches (111) et au deuxième ordonnanceur de tranches (112) ;
dans lequel le premier ordonnanceur de tranches (111) et le deuxième ordonnanceur de tranches (112) sont respectivement configurés pour :
- recevoir une demande de déploiement d'instances de la première tranche de réseau (11) et de la deuxième tranche de réseau (12) ; et
- effectuer des placements d'optimisation pour lesdites instances de la première tranche de réseau (11) et de la deuxième tranche de réseau (12) sur la base desdites instructions d'ordonnancement transmises.

2. Système selon la revendication 1, dans lequel l'orchestrateur (100) est configuré pour créer et supprimer ladite première tranche de réseau (11) et ladite deuxième tranche de réseau (12) ; et
dans lequel l'ordonnanceur principal (110) est configuré pour créer ou supprimer ledit premier ordonnanceur de tranches (111) selon la création ou la suppression de la première tranche de réseau (11), et pour créer ou supprimer ledit deuxième ordonnanceur de tranches (112) selon la création ou la suppression de la deuxième tranche de réseau (12) ; et/ou
dans lequel l'orchestrateur (100) est configuré pour effectuer lesdits déploiements d'instances de la première tranche de réseau (11) et de la deuxième tranche de réseau (12) indépendamment l'un de l'autre.

3. Système selon la revendication 1, dans lequel l'ordonnanceur principal (110) est configuré pour :
- filtrer ladite pluralité de premiers noeuds (11a, 11b, etc.) et ladite pluralité de deuxièmes noeuds (12a, 12b, etc.) sur la base desdites mesures de ressources et dudit jeu d'exigences, et
- allouer des ressources à au moins un noeud dans la première tranche de réseau (11) de ladite pluralité de premiers noeuds (11a, 11b, etc.) filtrés et à au moins un noeud dans la deuxième tranche de réseau (12) de ladite pluralité de deuxièmes noeuds (12a, 12b, etc.) filtrés ; et/ou
dans lequel le premier ordonnanceur de tranches (111) et le deuxième ordonnanceur de tranches (112) sont respectivement configurés pour :
- recevoir de la base de données (120) les mesures de ressources en ce qui concerne une pluralité de premiers noeuds (11a, 11b, etc.) et une pluralité de deuxièmes noeuds (12a, 12b, etc.) dans le réseau de communication (10),
- recevoir de l'ordonnanceur principal (110) les instructions d'ordonnancement correspondantes,
- filtrer ladite pluralité de premiers noeuds (11a, 11b, etc.) et ladite pluralité de deuxièmes noeuds (12a, 12b, etc.) sur la base desdites mesures de ressources et dudit jeu d'exigences, et
- allouer des ressources à au moins un noeud dans la première tranche de réseau (11) de ladite pluralité de premiers noeuds (11a, 11b, etc.) filtrés et à au moins un noeud dans la deuxième tranche de réseau (12) de ladite pluralité de deuxièmes noeuds (12a, 12b, etc.) filtrés.

4. Système selon la revendication 3, dans lequel l'ordonnanceur principal (110) est configuré pour :
- rejeter des noeuds de ladite pluralité de premiers noeuds (11a, 11b, etc.) et de ladite pluralité de deuxièmes noeuds (12a, 12b, etc.) si les mesures de ressources desdits noeuds ne répondent pas audit jeu d'exigences, et
- classer ledit au moins un noeud de la pluralité de premiers noeuds (11a, 11b, etc.) filtrés et ledit au moins un noeud de la pluralité de deuxièmes noeuds (12a, 12b, etc.) filtrés sur la base desdites mesures de ressources et dudit jeu d'exigences ; et/ou
dans lequel le premier ordonnanceur de tranches (111) et le deuxième ordonnanceur de tranches (112) sont respectivement configurés pour :
- rejeter des noeuds de ladite pluralité de premiers noeuds (11a, 11b, etc.) et de ladite pluralité de deuxièmes noeuds (12a, 12b, etc.) si les mesures de ressources desdits noeuds ne répondent pas audit jeu d'exigences, et
- classer ledit au moins un noeud de la pluralité de premiers noeuds (11a, 11b, etc.) filtrés et ledit au moins un noeud de la pluralité de deuxièmes noeuds (12a, 12b, etc.) filtrés sur la base desdites mesures de ressources et dudit jeu d'exigences.

5. Système selon l'une quelconque des revendications précédentes, dans lequel l'ordonnanceur principal (110) est configuré pour :
- évaluer des besoins en ressources de la première tranche de réseau (11) et de la deuxième tranche de réseau (12), et
- ajouter une ressource à la première tranche de réseau (11) et à la deuxième tranche de réseau (12) ou l'en libérer, sur la base desdits besoins en ressources évalués ; et/ou
dans lequel le premier ordonnanceur de tranches (111) et le deuxième ordonnanceur de tranches (112) sont respectivement configurés pour :
- évaluer des besoins en ressources de la première tranche de réseau (11) et de la deuxième tranche de réseau (12), et
- demander à l'ordonnanceur principal (110) d'ajouter une ressource à la première tranche de réseau (11) et à la deuxième tranche de réseau (12) ou de l'en libérer sur la base desdits besoins en ressources évalués.

6. Système selon l'une quelconque des revendications 3 à 5, dans lequel l'orchestrateur (100) comprend en outre un dispositif de commande (130) configuré pour :
- employer, sur la base d'une demande reçue dudit ordonnanceur principal (110), un routage entre au moins deux noeuds de ladite pluralité de premiers noeuds (11a, 11b, etc.) filtrés et entre au moins deux noeuds de ladite pluralité de deuxièmes noeuds (12a, 12b, etc.) filtrés, selon la création de ladite première tranche de réseau (11) et de ladite deuxième tranche de réseau (12), et
- réinitialiser, sur la base d'une demande reçue dudit ordonnanceur principal (110), un routage entre au moins deux noeuds de ladite pluralité de premiers noeuds (11a, 11b, etc.) filtrés et entre au moins deux noeuds de ladite pluralité de deuxièmes noeuds (12a, 12b, etc.) filtrés, selon la sélection de ladite première tranche de réseau (11) et de ladite deuxième tranche de réseau (12) ; et
dans lequel le premier ordonnanceur de tranches (111) et le deuxième ordonnanceur de tranches (112) sont respectivement configurés pour supprimer des instances dudit au moins un noeud de ladite pluralité de premiers noeuds (11a, 11b, etc.) filtrés et dudit au moins un noeud de ladite pluralité de deuxièmes noeuds (12a, 12b, etc.) filtrés, selon la sélection de ladite première tranche de réseau (11) et de ladite deuxième tranche de réseau (12).

7. Système selon l'une quelconque des revendications précédentes, comprenant en outre une pluralité de premiers agents (141a, 141b, etc.) connectés fonctionnellement au réseau de communication (10) et au premier ordonnanceur de tranches (111), et une pluralité de deuxièmes agents (142a, 142b, etc.) connectés fonctionnellement au réseau de communication (10) et au deuxième ordonnanceur de tranches (112), ladite pluralité de premiers agents (141a, 141b, etc.) et ladite pluralité de deuxièmes agents (142a, 142b, etc.) étant respectivement configurées pour :
- recevoir une demande dudit premier ordonnanceur de tranches (111) et dudit deuxième ordonnanceur de tranches (112) pour créer et supprimer des instances de la première tranche de réseau (11) et de la deuxième tranche de réseau (12) ;
- relancer une instance de la première tranche de réseau (11) et de la deuxième tranche de réseau (12) qui a été arrêtée, et faire une notification au premier ordonnanceur de tranches (111) et au deuxième ordonnanceur de tranches (112) ; et
- collecter des mesures de ressources dans une pluralité de premiers noeuds (11a, 11b, etc.) et une pluralité de deuxièmes noeuds (12a, 12b, etc.) dans le réseau de communication (10), et envoyer lesdites mesures de ressources à l'orchestrateur (100).

8. Procédé de gestion de ressources réseau dans un réseau de communication (10) comprenant une première tranche de réseau (11) et une deuxième tranche de réseau (12), ledit procédé comprenant :
- la collecte dans un ordonnanceur principal (110) et le stockage dans une base de données (120), de mesures de ressources dans une pluralité de premiers noeuds (11a, 11b, etc.) compris dans la première tranche de réseau et une pluralité de deuxièmes noeuds (12a, 12b, etc.) compris dans la deuxième tranche de réseau dans le réseau de communication (10), dans lequel les mesures de ressources collectées comprennent au moins une parmi une utilisation de mémoire actuelle et une mémoire disponible actuelle, une utilisation d'unité centrale de traitement (CPU) actuelle et une CPU disponible actuelle desdits premier et deuxième noeuds ;
- la collecte dans ledit ordonnanceur principal (110) et le stockage dans ladite base de données (120), d'un jeu d'exigences devant être satisfaites par le réseau de communication (10) en ce qui concerne la première tranche de réseau (11) et la deuxième tranche de réseau (12), dans lequel le jeu d'exigences comporte un ou plusieurs parmi un débit de données, un débit descendant, un débit montant, une fiabilité, une latence, une transmission de données de bande passante, une performance d'unité de traitement graphique (GPU), ou une combination de ceux-ci ;
- la configuration, dans ledit ordonnanceur principal (110), d'instructions d'ordonnancement sur la base desdites mesures de ressources et dudit jeu d'exigences ; et
- la transmission desdites instructions d'ordonnancement dudit ordonnanceur principal (110) à un premier ordonnanceur de tranches (111) et à un deuxième ordonnanceur de tranches (112) connectés fonctionnellement audit ordonnanceur principal (110), ledit premier ordonnanceur de tranches (111) étant connecté fonctionnellement à ladite première tranche de réseau (11), et ledit deuxième ordonnanceur de tranches (112) étant connecté fonctionnellement à ladite deuxième tranche de réseau (12) ;
- la réception, respectivement par le premier ordonnanceur de tranches (111) et le deuxième ordonnanceur de tranches (112), d'une demande de déploiement d'instances de la première tranche de réseau (11) et de la deuxième tranche de réseau (12) ; et
- la réalisation, respectivement par le premier ordonnanceur de tranches (111) et le deuxième ordonnanceur de tranches (112), de placements d'optimisation pour des instances de la première tranche de réseau (11) et de la deuxième tranche de réseau (12) sur la base desdites instructions d'ordonnancement transmises.

9. Procédé selon la revendication 8, comprenant en outre :
- le filtrage, dans ledit ordonnanceur principal (110), de ladite pluralité de premiers noeuds (11a, 11b, etc.) et de ladite pluralité de deuxièmes noeuds (12a, 12b, etc.) sur la base desdites mesures de ressources et dudit jeu d'exigences, et
- l'allocation, dans ledit ordonnanceur principal (110), de ressources à au moins un noeud dans la première tranche de réseau (11) de ladite pluralité de premiers noeuds (11a, 11b, etc.) filtrés et à au moins un noeud dans la deuxième tranche de réseau (12) de ladite pluralité de deuxièmes noeuds (12a, 12b, etc.) filtrés ; et/ou
- la réception, respectivement dans ledit premier ordonnanceur de tranches (111) et ledit deuxième ordonnanceur de tranches (112), en provenance de la base de données (120), de mesures de ressources en ce qui concerne une pluralité de premiers noeuds (11a, 11b, etc.) et une pluralité de deuxièmes noeuds (12a, 12b, etc.) dans le réseau de communication (10),
- la réception, respectivement dans ledit premier ordonnanceur de tranches (111) et ledit deuxième ordonnanceur de tranches (112), en provenance de l'ordonnanceur principal (110), d'instructions d'ordonnancement correspondantes,
- le filtrage, respectivement dans ledit premier ordonnanceur de tranches (111) et ledit deuxième ordonnanceur de tranches (112), de ladite pluralité de premiers noeuds (11a, 11b, etc.) et de ladite pluralité de deuxièmes noeuds (12a, 12b, etc.) sur la base desdites mesures de ressources et dudit jeu d'exigences, et
- l'allocation, respectivement dans ledit premier ordonnanceur de tranches (111) et ledit deuxième ordonnanceur de tranches (112), de ressources à au moins un noeud dans la première tranche de réseau (11) de ladite pluralité de premiers noeuds (11a, 11b, etc.) filtrés et à au moins un noeud dans la deuxième tranche de réseau (12) de ladite pluralité de deuxièmes noeuds (12a, 12b, etc.) filtrés.

10. Procédé selon la revendication 9, comprenant en outre :
- le rejet, dans ledit ordonnanceur principal (110), de noeuds de ladite pluralité de premiers noeuds (11a, 11b, etc.) et de ladite pluralité de deuxièmes noeuds (12a, 12b, etc.) si les mesures de ressources desdits noeuds ne répondent pas audit jeu d'exigences, et
- le classement, dans ledit ordonnanceur principal (110), dudit au moins un noeud de la pluralité de premiers noeuds (11a, 11b, etc.) filtrés et dudit au moins un noeud de la pluralité de deuxièmes noeuds (12a, 12b, etc.) filtrés sur la base desdites mesures de ressources et dudit jeu d'exigences ; et/ou
- le rejet, respectivement dans ledit premier ordonnanceur de tranches (111) et ledit deuxième ordonnanceur de tranches (112), de noeuds de ladite pluralité de premiers noeuds (11a, 11b, etc.) et de ladite pluralité de deuxièmes noeuds (12a, 12b, etc.) si les mesures de ressources desdits noeuds ne répondent pas audit jeu d'exigences, et
- le classement, respectivement dans ledit premier ordonnanceur de tranches (111) et ledit deuxième ordonnanceur de tranches (112), dudit au moins un noeud de la pluralité de premiers noeuds (11a, 11b, etc.) filtrés et dudit au moins un noeud de la pluralité de deuxièmes noeuds (12a, 12b, etc.) filtrés sur la base desdites mesures de ressources et dudit jeu d'exigences.

11. Procédé selon l'une quelconque des revendications 8 à 10, comprenant en outre :
- la réception, respectivement dans ledit premier ordonnanceur de tranches (111) et ledit deuxième ordonnanceur de tranches (112), une demande de déploiement d'instances de la première tranche de réseau (11) et de la deuxième tranche de réseau (12) ; et
- la réalisation, respectivement dans ledit premier ordonnanceur de tranches (111) et ledit deuxième ordonnanceur de tranches (112), de placements d'optimisation pour lesdites instances de la première tranche de réseau (11) et de la deuxième tranche de réseau (12) sur la base desdites instructions d'ordonnancement transmises.

12. Procédé selon l'une quelconque des revendications 8 à 11, comprenant en outre :
- l'évaluation, dans ledit ordonnanceur principal, de besoins en ressources de la première tranche de réseau (11) et de la deuxième tranche de réseau (12), et
- l'ajout, dans ledit ordonnanceur principal, d'une ressource à la première tranche de réseau (11) et à la deuxième tranche de réseau (12), ou sa libération, sur la base desdits besoins en ressources évalués ; et/ou
- l'évaluation, respectivement dans ledit premier ordonnanceur de tranches (111) et ledit deuxième ordonnanceur de tranches (112), besoins en ressources de la première tranche de réseau (11) et de la deuxième tranche de réseau (12), et
- la demande, respectivement dans ledit premier ordonnanceur de tranches (111) et ledit deuxième ordonnanceur de tranches (112), à l'ordonnanceur principal (110) d'ajouter une ressource à la première tranche de réseau (11) et à la deuxième tranche de réseau (12) ou de l'en libérer, sur la base desdits besoins en ressources évalués.

13. Procédé selon l'une quelconque des revendications 8 à 12, comprenant en outre :
- l'emploi, dans un dispositif de commande (130), sur la base d'une demande reçue dudit ordonnanceur principal (110), d'un routage entre au moins deux noeuds de ladite pluralité de premiers noeuds (11a, 11b, etc.) filtrés et entre au moins deux noeuds de ladite pluralité de deuxièmes noeuds (12a, 12b, etc.) filtrés, selon la création de ladite première tranche de réseau (11) et de ladite deuxième tranche de réseau (12), et
- la réinitialisation, dans ledit dispositif de commande (130), sur la base d'une demande reçue dudit ordonnanceur principal (110), d'un routage entre au moins deux noeuds de ladite pluralité de premiers noeuds (11a, 11b, etc.) filtrés et entre au moins deux noeuds de ladite pluralité de deuxièmes noeuds (12a, 12b, etc.) filtrés, selon la sélection de ladite première tranche de réseau (11) et de ladite deuxième tranche de réseau (12) ; et
- la suppression, respectivement dans ledit premier ordonnanceur de tranches (111) et ledit deuxième ordonnanceur de tranches (112), d'instances dudit au moins un noeud de ladite pluralité de premiers noeuds (11a, 11b, etc.) filtrés et dudit au moins un noeud de ladite pluralité de deuxièmes noeuds (12a, 12b, etc.) filtrés, selon la sélection de ladite première tranche de réseau (11) et de ladite deuxième tranche de réseau (12).
